# EUROPEAN PATENT SPECIFICATION

(11) **EP 3 968 671 B1**
(45) Date of publication and mention of the grant of the patent: **28.02.2024**
(21) Application number: 20852509.7
(22) Date of filing: 07.08.2020
(51) Int. Cl.: H04W 4/80, H04W 76/14, H04W 8/00, H04W 84/12, H04N 21/41, H04L 65/40, H04N 21/4363, H04N 21/414

(54) **METHOD FOR INFORMATION TRANSMISSION AND ELECTRONIC DEVICE**
VERFAHREN ZUR INFORMATIONSÜBERTRAGUNG UND ELEKTRONISCHE VORRICHTUNG
PROCÉDÉ DE TRANSMISSION D'INFORMATIONS ET DISPOSITIF ÉLECTRONIQUE

(30) Priority: 09.08.2019 CN 201910736195
(43) Date of publication of application: 16.03.2022
(73) Proprietor: Honor Device Co., Ltd., Shenzhen, Guangdong 518040 (CN)
(72) Inventor: JIN, Zhong, Shenzhen, Guangdong 518040 (CN); LV, Xin, Shenzhen, Guangdong 518040 (CN); ZHANG, Jinming, Shenzhen, Guangdong 518040 (CN)
(74) Representative: Epping - Hermann - Fischer
(86) International application number: PCT/CN2020/107824
(87) International publication number: WO 2021/027727

(56) References cited:
- WO-A1-2016/029854
- CN-A- 104 184 668
- CN-A- 105 472 778
- CN-A- 108 399 056
- CN-A- 109 587 667
- US-A1- 2019 053 302
- Borriello Gaetano, Pau Giovanni, Gruteser Marco, Hong Jason, Zhang Chi, Zhang Xinyu, Chandra Ranveer: "Energy Efficient WiFi Display", Proceedings of the 13th Annual International Conference on Mobile Systems, Applications, and Services, MobiSys '15, Florence, Italy, May 18 - 22, 2015, ACM Press, New York, New York, USA, 18 May 2015 (2015-05-18), pages 405-418, XP055780080, New York, New York, USA DOI: 10.1145/2742647.2742654 ISBN: 978-1-4503-3494-5

## Description

### TECHNICAL FIELD

This application relates to the field of electronic devices, and more specifically, to an information transmission method and an electronic device.

### BACKGROUND

Wireless projection technologies currently have been widely used in lives of users. For example, a user may project a screen of a mobile phone to a large-screen device (for example, a smart TV) by using a wireless projection technology, and the user can watch pictures, videos, and the like on the mobile phone through the large-screen device. The wireless projection technologies have improved user experience when the user is watching pictures and videos.

However, the proportion of mobile phones on the market that support only 2.4 GHz is still high. If the large-screen device is connected on 5 GHz, a mobile phone that supports only 2.4 GHz cannot discover the large screen, and thus cannot establish a connection with the large-screen device. This leads to a lack of a screen projection scene, making the mobile phone unable to project the screen to the large-screen device in real time.

US2019/053302A1 provides an electronic device and a method for forming a Wi-Fi direct group. The electronic device establishes a first wireless connection with the first external by using a first channel of a first frequency band, listens for a probe request over a second channel of a second frequency band different from the first frequency band every selected time period, receives the probe request from a second external device, transmit a probe response to the second external device through the second channel, and selects a third channel that allows simultaneous connectivity with the first external device and the second external device.

### SUMMARY

The invention is set out in the appended set of claims. This application provides an information transmission method and an electronic device, helping an electronic device that supports only 2.4 GHz transmit information to a large-screen device in real time.

### BRIEF DESCRIPTION OF DRAWINGS

FIG. 1 is a schematic diagram of a hardware structure of an electronic device according to an embodiment of this application;
FIG. 2 is a schematic diagram of a software structure of an electronic device according to an embodiment of this application;
FIG. 3 is a schematic diagram of a set of GUIs according to an embodiment of this application;
FIG. 4 is a schematic diagram of another set of GUIs according to an embodiment of this application;
FIG. 5 is a schematic diagram of another set of GUIs according to an embodiment of this application;
FIG. 6 is a schematic diagram of another set of GUIs according to an embodiment of this application;
FIG. 7 is a schematic diagram of a Wi-Fi P2P technology;
FIG. 8 is a schematic flowchart of an information transmission method according to an embodiment of this application;
FIG. 9 is a schematic diagram of a time-division listening manner according to an embodiment of this application;
FIG. 10 is a schematic diagram of another time-division listening manner according to an embodiment of this application;
FIG. 11 is a schematic diagram of another time-division listening manner according to an embodiment of this application;
FIG. 12 is a schematic diagram of another time-division listening manner according to an embodiment of this application;
FIG. 13 is another schematic flowchart of an information transmission method according to an embodiment of this application;
FIG. 14 is another schematic flowchart of an information transmission method according to an embodiment of this application;
FIG. 15 is another schematic flowchart of an information transmission method according to an embodiment of this application; and
FIG. 16 is a schematic block diagram of an electronic device according to an embodiment of this application.

### DESCRIPTION OF EMBODIMENTS

Terms used in the following embodiments are merely intended for a purpose of describing a particular embodiment, and are not intended to limit this application. As used in the specification of this application and the appended claims, singular expressions such as "a", "an", "said", "foregoing", "the", and "this" are intended to include such expression as "one or more", unless otherwise expressly specified in the context. It should also be understood that "at least one" and "one or more" in the following embodiments of this application refer to one, two, or more than two. The term "and/or" is used for describing an association relationship between associated objects, and indicates that three relationships may exist; for example, A and/or B may indicate the following three cases: A alone, both A and B, and B alone, where A and B may be singular or plural. The character "/" generally indicates an "or" relationship between the associated objects before and after the character.

Reference to "one embodiment", "some embodiments", or the like described in the specification means that a particular feature, structure, or characteristic described in combination with the embodiment is included in one or more embodiments of this application. Therefore, phrases such as "in one embodiment", "in some embodiments", "in other embodiments", and "in some other embodiments" throughout this specification do not necessarily all refer to the same embodiment, but rather mean "one or more, but not all, embodiments", unless otherwise specifically emphasized. The terms "include", "comprise", "have", and variants thereof all mean "include but not be limited to", unless otherwise specifically emphasized.

The following describes an electronic device, user interfaces for such an electronic device, and embodiments of using such an electronic device. In some embodiments, the electronic device may alternatively be a portable electronic device including other functions such as personal digital assistant and/or music player functions, for example, a mobile phone, a tablet computer, or a wearable electronic device (such as a smart watch) with a wireless communication capability. An exemplary embodiment of the portable electronic device includes, but is not limited to, a portable electronic device equipped with iOS^{®}, Android^{®}, Microsoft^{®}, or another operating system. The portable electronic device may alternatively be another portable electronic device, for example, a laptop (Laptop). It should also be understood that in some other embodiments, the electronic device may alternatively be not a portable electronic device, but a desktop computer.

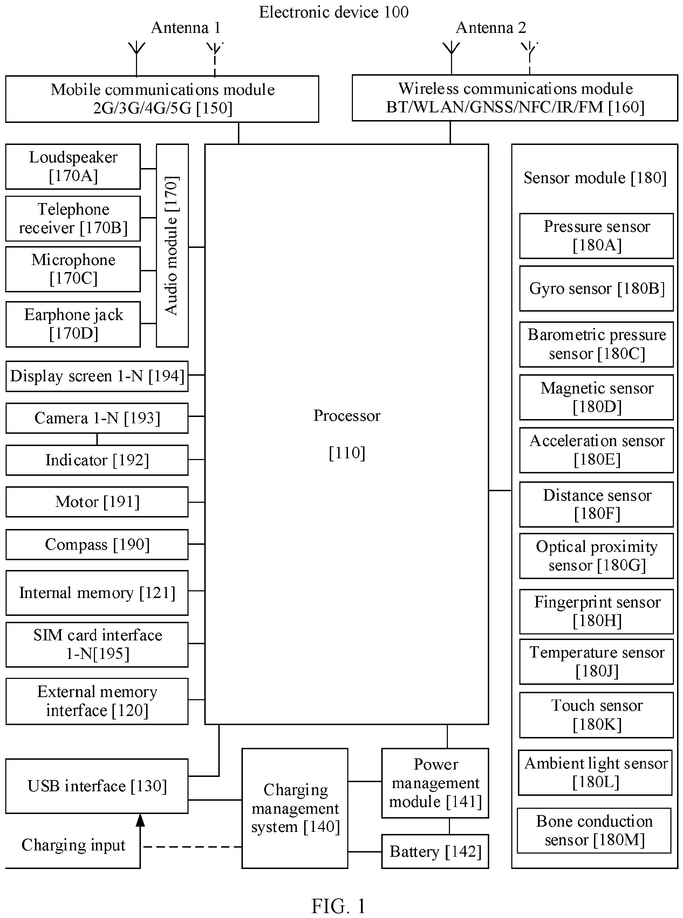

For example, FIG. 1 is a schematic structural diagram of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a telephone receiver 170B, a microphone 170C, an earphone jack 170D, a sensor module 180, a compass 190, a motor 191, an indicator 192, a camera 193, a display screen 194, a subscriber identification module (subscriber identification module, SIM) card interface 195, and the like.

It may be understood that the structure illustrated in the embodiments of this application constitutes no specific limitation on the electronic device 100. In some other embodiments of this application, the electronic device 100 may include more or fewer components than those shown in the figure, or combine some components, or split some components, or have a different component arrangement. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate components, or may be integrated into one or more processors. In some embodiments, the electronic device 100 may further include one or more processors 110. The controller may generate an operation control signal based on instruction operation code and a timing signal, to control instruction fetch and instruction execution. In some other embodiments, a memory may be further provided in the processor 110 to store instructions and data. For example, the memory in the processor 110 may be a cache memory. The memory may store instructions or data that the processor 110 has just used or used cyclically. If the processor 110 needs to use the instructions or the data again, the processor 110 may directly call the instructions or the data from the memory, thereby avoiding repeated access, reducing waiting time of the processor 110, and improving data processing or instruction execution efficiency of the electronic device 100.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like. The USB interface 130 is an interface that is compliant with a USB standard specification, and may specifically be a Mini USB interface, a Micro USB interface, a USB type-C interface, or the like. The USB interface 130 may be configured to connect to the charger to charge the electronic device 100, and may also be configured to transmit data between the electronic device 100 and a peripheral device. The USB interface 130 may also be configured to connect to an earphone, to play audio by using the earphone.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from the charger. The charger may be a wireless charger or a wired charger. In some wired charging embodiments, the charging management module 140 may receive charging input from the wired charger by using the USB interface 130. In some embodiments of the wireless charger, the charging management module 140 may receive wireless charging input through a wireless charging coil of the electronic device 100. The charging management module 140 may also supply power to the electronic device through the power management module 141 while charging the battery 142.

The power management module 141 is configured to connect to the battery 142, the charging management module 140, and the processor 110. The power management module 141 receives input from the battery 142 and/or the charging management module 140, to supply power to the processor 110, the internal memory 121, an external memory, the display screen 194, the camera 193, the wireless communications module 160, and the like. The power management module 141 may be further configured to monitor parameters such as a battery capacity, a quantity of battery cycles, and a battery health status (electric leakage and impedance). In some other embodiments, the power management module 141 may alternatively be provided in the processor 110. In some other embodiments, the power management module 141 and the charging management module 140 may alternatively be provided in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna of the electronic device 100 may be configured to cover one or more communication bands. Different antennas may be multiplexed to improve antenna utilization. For example, the antenna 1 may be multiplexed as a diversity antenna of a wireless local area network. In some other embodiments, the antenna may be used in combination with a tuning switch.

The mobile communications module 150 may provide a wireless communication solution including 2G/3G/4G/5G applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit the processed electromagnetic wave to the modem processor for demodulation. The mobile communications module 150 may further amplify a signal modulated by the modem processor, and convert the signal into an electromagnetic wave through the antenna 1 for transmission. In some embodiments, at least some of functional modules of the mobile communications module 150 may be provided in the processor 110. In some embodiments, at least some of functional modules of the mobile communications module 150 and at least some of modules of the processor 110 may be provided in a same device. The wireless communications module 160 may provide a wireless communication solution to be applied to the electronic device 100, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communications module 160 may be one or more devices integrated with at least one communication processing module. The wireless communications module 160 receives an electromagnetic wave through the antenna 2, performs frequency modulation and filtering processing on the electromagnetic wave signal, and transmits the processed signal to the processor 110. The wireless communications module 160 may further receive a to-be-transmitted signal from the processor 110, perform frequency modulation and amplification on the signal, and convert the signal into an electromagnetic wave through the antenna 2 for transmission.

The electronic device 100 implements a display function by using the GPU, the display screen 194, the application processor, and the like. The GPU is an image processing microprocessor, and is connected to the display screen 194 and the application processor. The GPU is configured to perform mathematics and geometrical calculation for graphics rendering. The processor 110 may include one or more GPUs that execute a program instruction to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Miniled, a MicroLed, a Micro-oLed, a quantum dot light emitting diode (quantum dot light emitting diodes, QLED), and the like. In some embodiments, the electronic device 100 may include one or more display screens 194.

In some embodiments of this application, when the display panel uses OLED, AMOLED, FLED, and other materials, the display screen 194 in FIG. 1 can be bent. Herein, that the display screen 194 can be bent means that the display screen can be bent to any angle at any location, and may remain at that angle. For example, the display screen 194 may be vertically or horizontally folded in the middle.

The display screen 194 of the electronic device 100 may be a flexible screen. Currently, flexible screens have attracted much attention for their unique characteristics and huge potential. Compared with traditional screens, the flexible screens have characteristics of bendability and strong flexibility, and can provide users with new interactive manners based on the bendability, which can meet more demands of the users for electronic devices. For an electronic device equipped with a foldable display screen, the foldable display screen on the electronic device can be switched at any time between a small screen in folded mode and a large screen in unfolded mode. Therefore, users are increasingly tending to use the split screen function on electronic devices equipped with a foldable display screen.

The electronic device 100 may implement a shooting function by using the ISP, the camera 193, the video codec, the GPU, the display screen 194, the application processor, and the like.

The ISP is configured to process data fed back by the camera 193. For example, during photographing, a shutter is pressed, and light is transmitted to a photosensitive element of the camera through lens. An optical signal is converted into an electrical signal. The photosensitive element of the camera transfers the electrical signal to the ISP for processing, so as to convert the electrical signal into an image visible to the naked eye. The ISP may further optimize noise, brightness, and a skin color of the image through algorithms. The ISP may further optimize parameters such as exposure and a color temperature of a shooting scene. In some embodiments, the ISP may be disposed in the camera 193.

The camera 193 is configured to capture a static image or a video. An optical image is generated for an object by using the lens, and is projected to the photosensitive element. The photosensitive element may be a charge coupled device (charge coupled device, CCD) or a complementary metal-oxide semiconductor (complementary metal-oxide semiconductor, CMOS) phototransistor. The photosensitive element converts an optical signal into an electrical signal, and then transfers the electrical signal to the ISP to convert it into a digital image signal. The ISP outputs the digital image signal to the DSP for processing. The DSP converts the digital image signal into an image signal in a standard format such as RGB or YUV. In some embodiments, the electronic device 100 may include one or more cameras 193.

The digital signal processor is configured to process a digital signal, and in addition to processing a digital image signal, the digital signal processor may also process other digital signals. For example, when the electronic device 100 selects a frequency, the digital signal processor is configured to perform Fourier transform and the like on energy of the frequency.

The video codec is configured to compress or decompress a digital video. The electronic device 100 may support one or more types of video codecs, so that the electronic device 100 can play or record videos in a plurality of encoding formats, such as moving picture experts group (moving picture experts group, MPEG) 1, MPEG2, MPEG3, and MPEG4.

The NPU is a neural-network (neural-network, NN) computing processor, quickly processes input information by using a biological neural network structure, for example by using a transfer mode between human-brain neurons and can also perform continuous self-learning. With the NPU, the electronic device 100 can implement intelligent cognition and other application such as image recognition, facial recognition, voice recognition, and text understanding.

The external memory interface 120 may be configured to connect to an external storage card such as a Micro SD card, to extend a storage capability of the electronic device 100. The external memory card communicates with the processor 110 through the external memory interface 120, to implement a data storage function, for example, saving music, video, and other files in the external memory card.

The internal memory 121 may be configured to store one or more computer programs, and the one or more computer programs include instructions. The processor 110 may run the instructions stored in the internal memory 121, so that the electronic device 100 performs the information transmission method provided in some embodiments of this application, executes various applications, and performs data processing. The internal memory 121 may include a program storage region and a data storage region. The program storage region may store an operating system, and may also store one or more applications (for example, gallery, contacts), and the like. The data storage region may store data (for example, photos and contacts) and the like created when the electronic device 100 is used. In addition, the internal memory 121 may include a highspeed random access memory, or may include a non-volatile memory such as one or more magnetic disk storage components, flash memory components, or universal flash storage (universal flash storage, UFS) devices. In some embodiments, the processor 110 may run the instructions stored in the internal memory 121, and/or the instruction stored in the memory disposed in the processor 110, so that the electronic device 100 performs the information transmission method provided in some embodiments of this application, executes other applications, and performs data processing. The electronic device 100 may implement an audio function such as music playing or recording by using the audio module 170, the loudspeaker 170A, the telephone receiver 170B, the microphone 170C, the earphone jack 170D, the application processor, and the like.

The sensor module 180 may include a pressure sensor 180A, a gyro sensor 180B, an barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, bone conduction sensor 180M, and the like. The pressure sensor 180A is configured to sense a pressure signal, and can convert the pressure signal into an electrical signal. In some embodiments, the pressure sensor 180A may be disposed in the display screen 194. There is a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display screen 194, the electronic device 100 detects strength of the touch operation by using the pressure sensor 180A. The electronic device 100 may also calculate a touch position based on a detection signal of the pressure sensor 180A. In some embodiments, touch operations that are applied to a same touch position but have different touch operation strength may correspond to different operation instructions. For example, when a touch operation whose touch operation strength is less than a first pressure threshold is applied to an SMS message application icon, an instruction for viewing an SMS message is executed; when a touch operation whose touch operation strength is greater than or equal to a first pressure threshold is applied to an SMS message application icon, an instruction for creating a new SMS message is executed. The gyro sensor 180B may be configured to determine a motion posture of the electronic device 100. In some embodiments, an angular velocity of the electronic device 100 around three axes (namely, x, y, and z axes) may be determined by using the gyro sensor 180B. The gyro sensor 180B may be used for image stabilization during photographing. For example, when a shutter is pressed, the gyro sensor 180B detects a shaking angle of the electronic device 100, and calculates, based on the angle, a distance for which a lens module needs to compensate, so that the lens can move reversely to counteract the shaking of the terminal device 100, so as to implement image stabilization. The gyro sensor 180B may be further used for navigation and somatosensory game scenarios.

The acceleration sensor 180E can detect magnitudes of accelerations of the electronic device 100 in all directions (usually three axes), can detect a magnitude and a direction of gravity when the electronic device 100 is in a static state, and can be further configured to recognize a posture of the electronic device, for landscape/portrait mode switching, a pedometer, and the like.

The ambient light sensor 180L is configured to sense brightness of ambient light. The electronic device 100 may adaptively adjust brightness of the display screen 194 based on the sensed brightness of the ambient light. The ambient light sensor 180L may be further configured to automatically adjust white balance during photographing. The ambient light sensor 180L may also cooperate with the optical proximity sensor 180G to detect whether the electronic device 100 is in a pocket to avoid an accidental touch.

The fingerprint sensor 180H is configured to collect a fingerprint. The electronic device 100 may implement fingerprint unlock, application access lock, fingerprint photographing, fingerprint-based call answering, and the like by using a feature of the collected fingerprint.

The temperature sensor 180J is configured to perform detection for a temperature. In some embodiments, the electronic device 100 executes a temperature processing policy by using the temperature detected by the temperature sensor 180J. For example, when the temperature reported by the temperature sensor 180J exceeds a threshold, the electronic device 100 reduces performance of a processor near the temperature sensor 180J, to reduce power consumption and implement thermal protection. In some other embodiments, when the temperature is lower than another threshold, the electronic device 100 heats the battery 142 to avoid abnormal shutdown of the electronic device 100 caused by low temperature. In some other embodiments, when the temperature is lower than still another threshold, the electronic device 100 boosts an output voltage of the battery 142 to avoid an abnormal shutdown caused by low temperature.

The touch sensor 180K is also referred to as a "touch panel". The touch sensor 180K may be disposed on the display screen 194, and the touch sensor 180K and the display screen 194 form a touchscreen, also referred to as a "touch screen". The touch sensor 180K is configured to detect a touch operation performed on or near the touch sensor 180K. The touch sensor may transfer the detected touch operation to the application processor to determine a touch event type, and may provide a visual output related to the touch operation through the display screen 194. In some other embodiments, the touch sensor 180K may alternatively be disposed on a surface of the electronic device 100, that is, at a location different from that of the display screen 194.

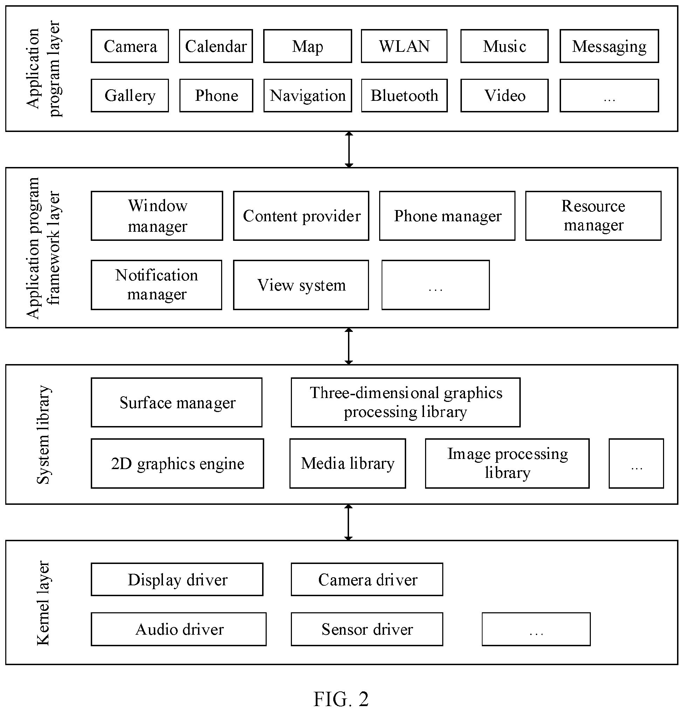

FIG. 2 is a schematic diagram of a software structure of an electronic device 100 according to an embodiment of this application. In a layered architecture, software is divided into several layers, and each layer has a clear role and task. The layers communicate with each other by using a software interface. In some embodiments, an Android system is divided into four layers: an application program layer, an application program framework layer, an Android runtime (Android runtime) and a system library, and a kernel layer from top to bottom. The application program layer may include a series of application program packages.

As shown in FIG. 2, the application program package may include application programs such as camera, gallery, calendar, calls, map, navigation, WLAN, Bluetooth, music, video, and SMS.

The application program framework layer provides an application programming interface (application programming interface, API) and a programming framework for an application program at the application program layer. The application program framework layer includes some predefined functions.

As shown in FIG. 2, the application program framework layer may include a window manager, a content provider, a view system, a phone manager, a resource manager, a notification manager, and the like.

The window manager is used to manage a window program. The window manager can obtain a size of a display screen, determine whether there is a status bar, lock the screen, take a screenshot, and the like.

The content provider is used to store and obtain data and make the data accessible to an application program. The data may include a video, an image, an audio, calls made and answered, a browse history, a bookmark, an address book, and the like.

The view system includes visual controls such as a control for displaying a text and a control for display an image. The view system may be used to build an application program. A display interface may include one or more views. For example, a display interface including an SMS notification icon may include a text display view and an image display view.

The phone manager is used to provide a communication function of the electronic device 100, for example, management of a call status (including answering or disconnected).

The resource manager provides various resources for an application program, such as a localized character string, an icon, an image, a layout file, and a video file.

The notification manager enables an application program to display notification information in the status bar, and may be used to convey a message of a notification type that may disappear automatically after a short stay without user interaction. For example, the notification manager is used to notify a user of download completion or remind a user of a message. The notification manager may also display a notification in a form of a chart or a scroll bar text in a status bar at the top of the system, for example, a notification of an application program running in the background, or may display a notification in a form of a dialog box on the screen. For example, text information is shown in the status bar, a prompt tone sounds, the electronic device vibrates, or the indicator lamp blinks.

The system library may include a plurality of function modules, for example, surface manager (surface manager), media libraries (media libraries), three-dimensional graphics processing library (for example, OpenGL ES), and 2D graphics engine (for example, SGL).

The surface manager is used to manage a display subsystem and provide fusion of 2D and 3D graphic layers for a plurality of application programs.

The media libraries support playback and recording in a plurality of common audio and video formats, and static image files. The media library can support a plurality of audio and video encoding formats such as MPEG4, H.264, MP3, AAC, AMR, JPG, and PNG.

The three-dimensional graphics processing library is used to implement three-dimensional graphics drawing, image rendering, synthesis, graphic layer processing, and the like.

The 2D graphics engine is a drawing engine for 2D graphics.

The kernel layer is a layer between hardware and software. The kernel layer includes at least a display driver, a camera driver, an audio driver, and a sensor driver.

For ease of understanding, the following embodiments of this application will take a mobile phone with the structure shown in FIG. 1 and FIG. 2 as an example to specifically describe the information transmission method provided in the embodiments of this application with reference to the accompanying drawings.

Before describing the technical solution in the embodiments of this application, concepts related to the embodiments of this application are first described.

Wi-Fi direct (Wi-Fi direct), also referred to as Wi-Fi peer to peer (Wi-Fi peer to peer, Wi-Fi P2P), is a peer to peer connection technology. It enables a plurality of Wi-Fi devices to constitute a peer to peer network (peer to peer network, P2P network) for communication with each other without an access point (access point, AP). One station (station, STA) that may function as a conventional AP is called a group owner (group owner, GO), and another STA may be called a group client (group client, GC). A GC may connect to a GO like connecting to an AP. One STA may play the role of GO (that is, acting as AP), and other STAs play the role of GC.

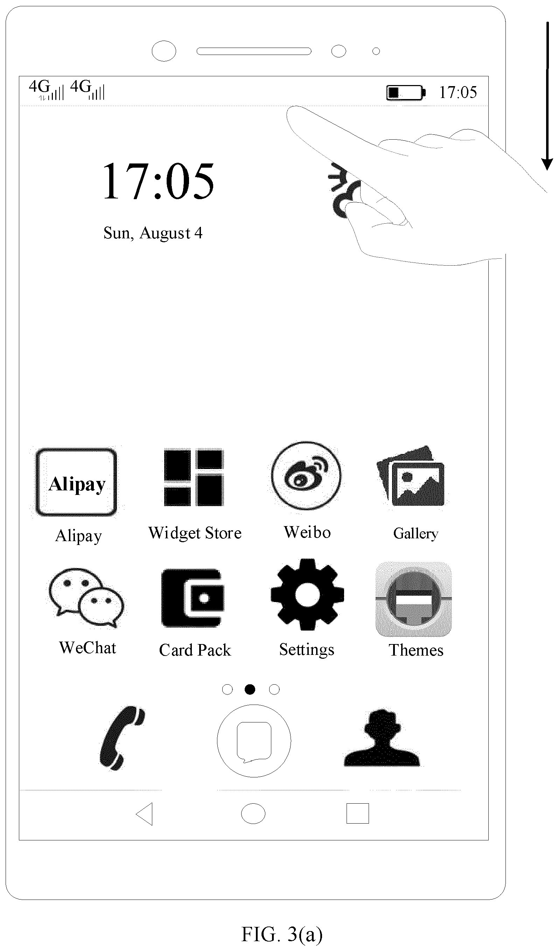

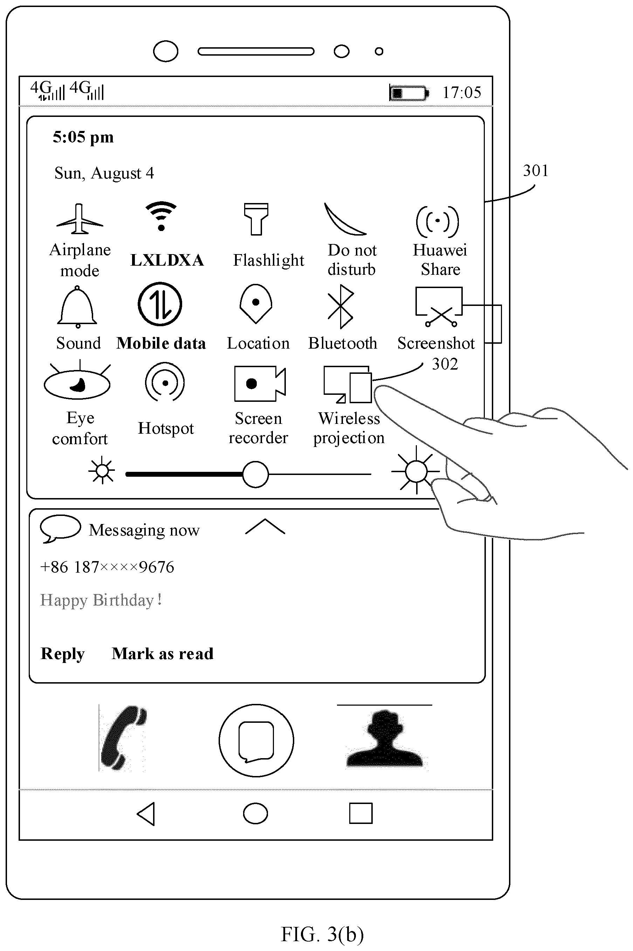

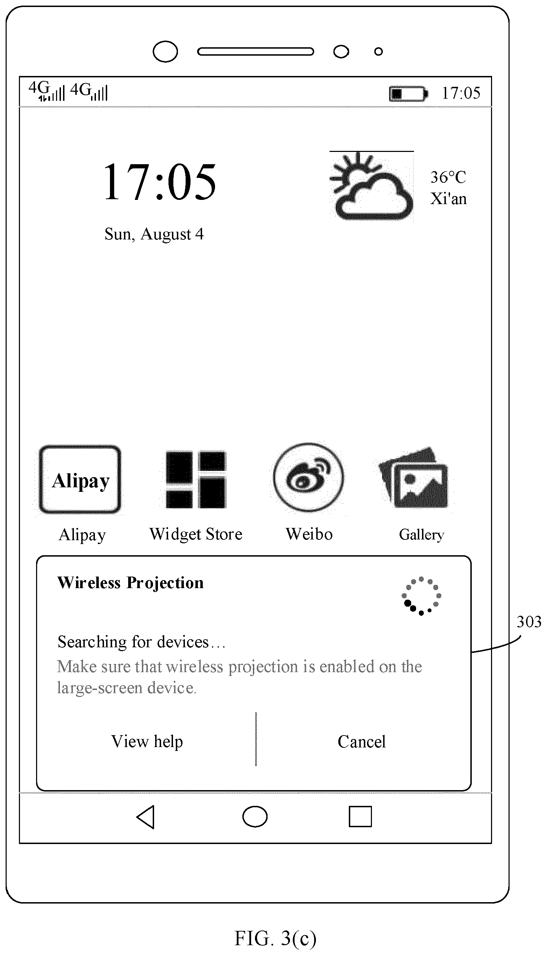

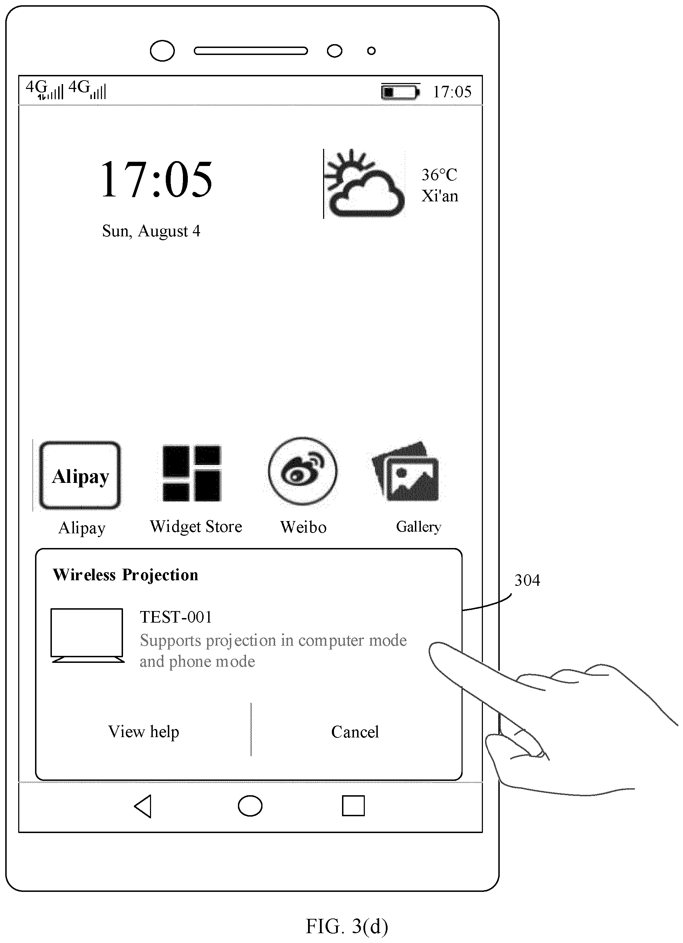

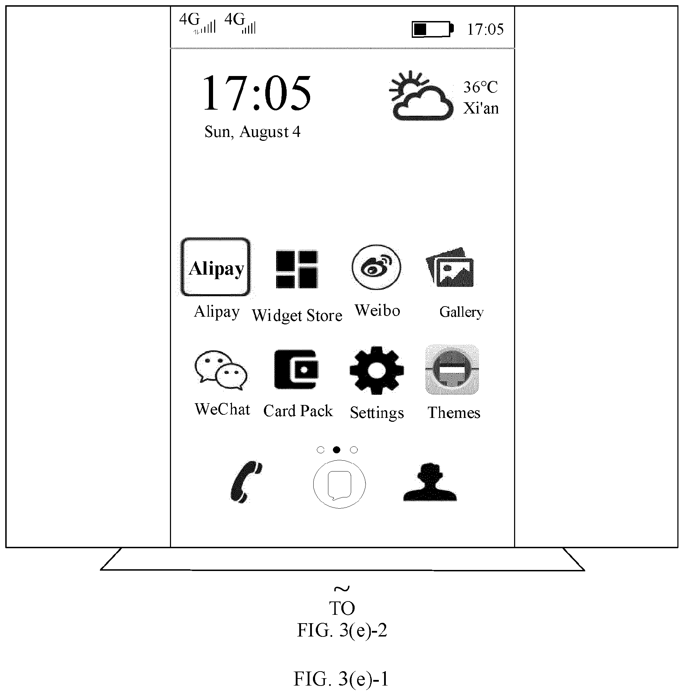

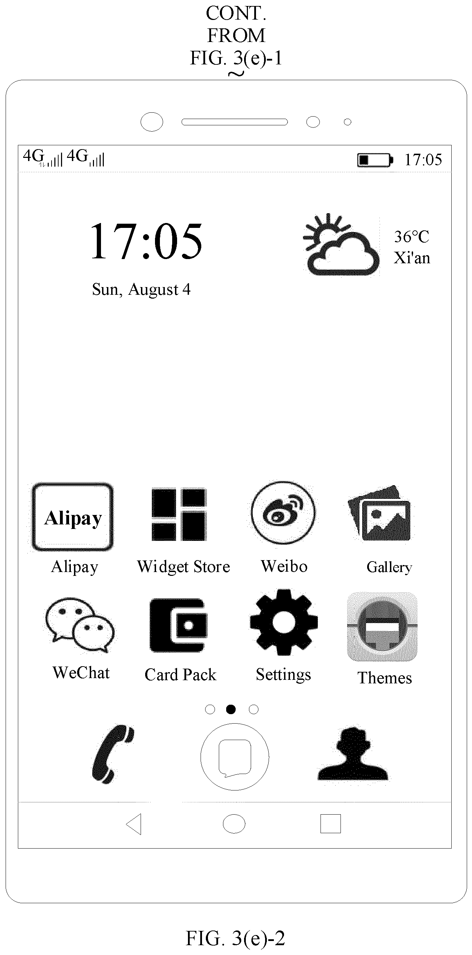

To construct a P2P network, firstly, an electronic device needs to find another electronic device through scanning by using the P2P protocol, and such a process is called a discovery phase; and after the discovery, establishment of a P2P link can be triggered. The Wi-Fi P2P technology is a basis for upper layer services. Currently, P2P applications built on P2P mainly include Miracast application, WLAN direct application, and the like. In a Miracast application scenario, one P2P-enabled electronic device may discover through scanning and connect to a P2P-enabled large-screen device, and then directly transmit resources of the electronic device such as videos and pictures to and display them on the large-screen device. With the P2P technology, experience of the Wi-Fi technology can be greatly enriched. FIG. 3 shows how a mobile phone is connected to a smart TV through the Miracast application.

FIG. 3 shows a set of graphical user interface (graphical user interface, GUI) pages of a mobile phone, where a process of screen projection from a mobile phone to a smart TV is shown in FIG. 3(a) to FIG. 3(e).

Referring to a GUI page shown in FIG. 3(a), the GUI page is a desktop of the mobile phone. The desktop of the mobile phone includes a plurality of application programs, such as Alipay, Widget Store, Weibo, Gallery, WeChat, Card Pack, Settings, and Themes. When the mobile phone detects an operation of sliding downward from a location near the top of the desktop by a user, a GUI page shown in FIG. 3(b) is displayed.

Referring to the GUI page shown in FIG. 3(b), the GUI page is a display interface of a drop-down menu of the mobile phone. This display interface includes a function menu bar 301 and an unread SMS notification bar. Functions included in the function menu bar 301 are Airplane mode, Wi-Fi, Bluetooth, Screen shot, Wireless Projection, and the like. When the mobile phone detects an operation of tapping the Wireless Projection control 302 by a user, a GUI page shown in FIG. 3(c) is displayed.

It should be understood that in this embodiment of this application, the user may slide downward from a location near the top of the screen, so that the mobile phone can display an interface of a drop-down menu. A plurality of function shortcut entries are included in the drop-down menu, for example, functions such as Airplane mode, Wi-Fi, Flashlight, Do Not Disturb, and Huawei Share (HUAWEI Share). The user may adjust the order of the functions in the drop-down menu, or may add or reduce content in the drop-down menu. The drop-down menu may also include some notification bars for reminding the user, such as an unread SMS notification bar for the user. Referring to the GUI page shown in FIG. 3(c), the GUI page is a display interface for scanning large-screen devices. This display interface includes a wireless projection reminder window 303, where the window 303 reminds the user by displaying texts "Searching for usable devices, please make sure that wireless projection function has been enabled on the large-screen devices." Referring to a GUI page shown in FIG. 3(d), the GUI page is another display interface for scanning large-screen devices. This display interface includes a wireless projection reminder window 304, where the window 304 reminds the user that a large-screen device with a device name (device name) of "TEST-001" is detected. When the mobile phone detects an operation of tapping the device name by the user, the mobile phone determines to connect to the large-screen device wirelessly.

It should be understood that the device name of the large-screen device may be a device name preset at the factory; alternatively, the user may modify it to a desired device name.

Referring to a GUI page shown in FIG. 3(e), the GUI page is a display interface shown on the smart TV to which the mobile phone has performed a wireless projection. The smart TV can display the desktop of the mobile phone, and the projection from the mobile phone to the smart TV is completed.

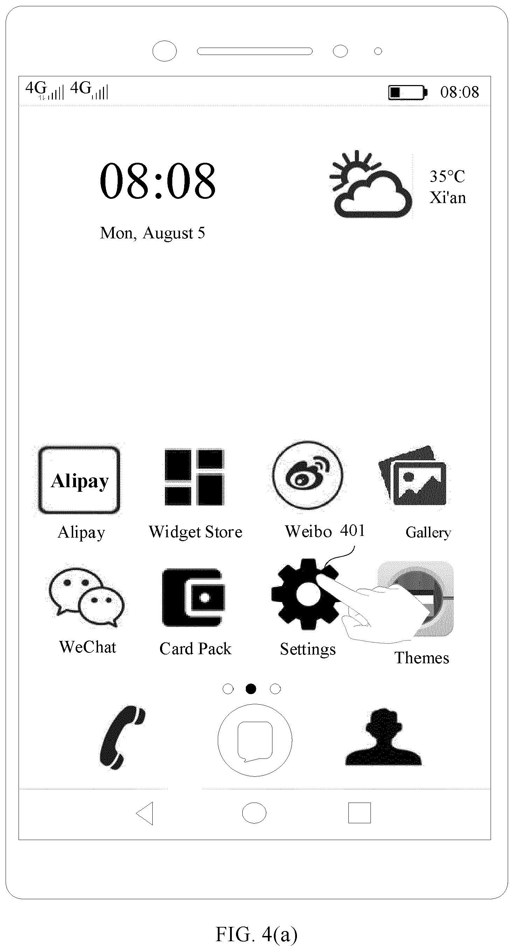

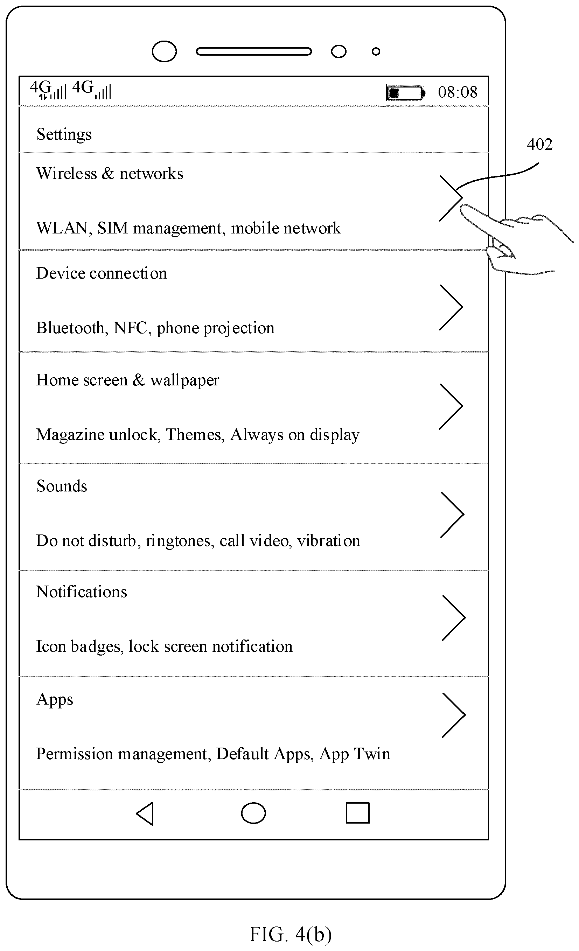

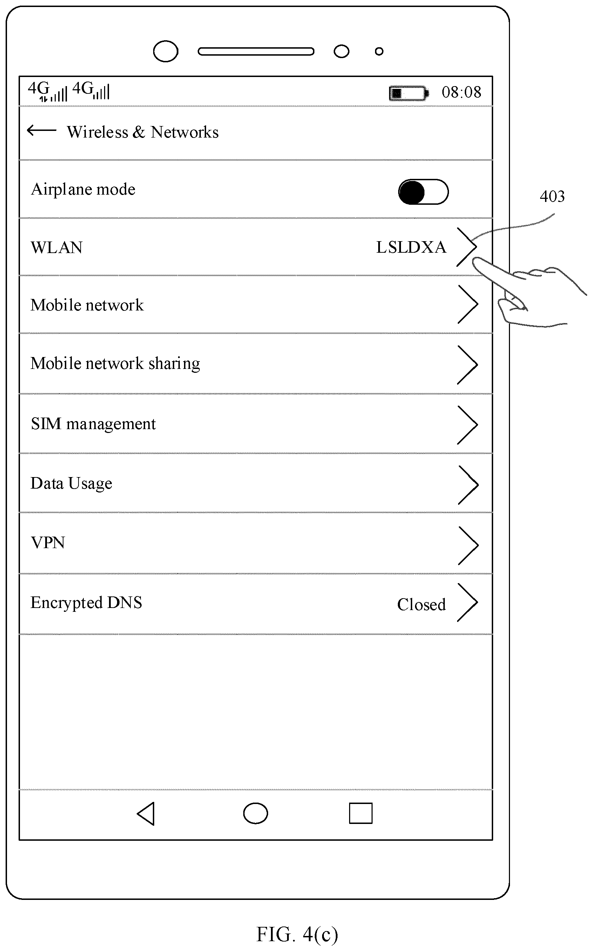

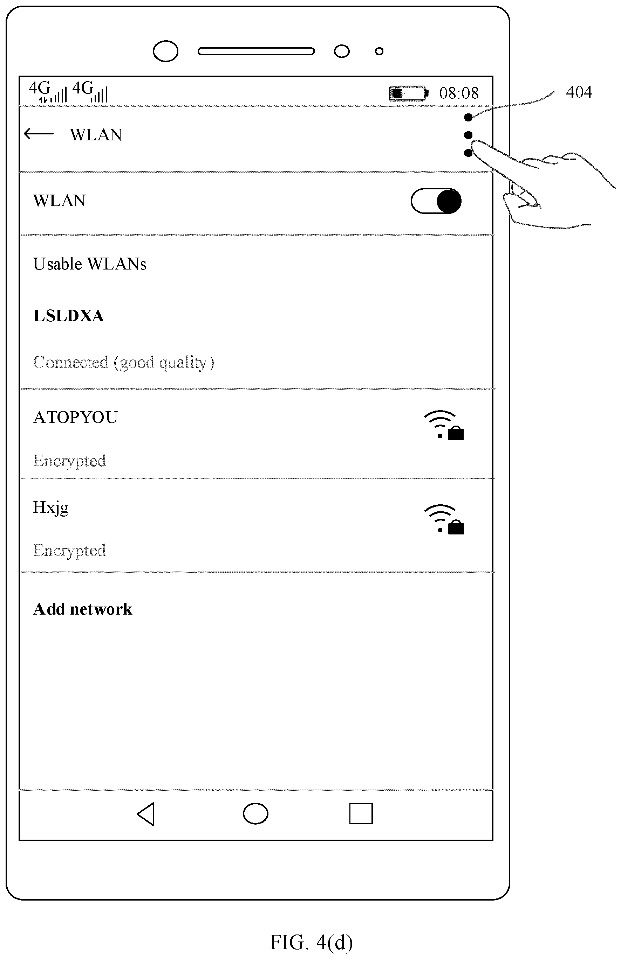

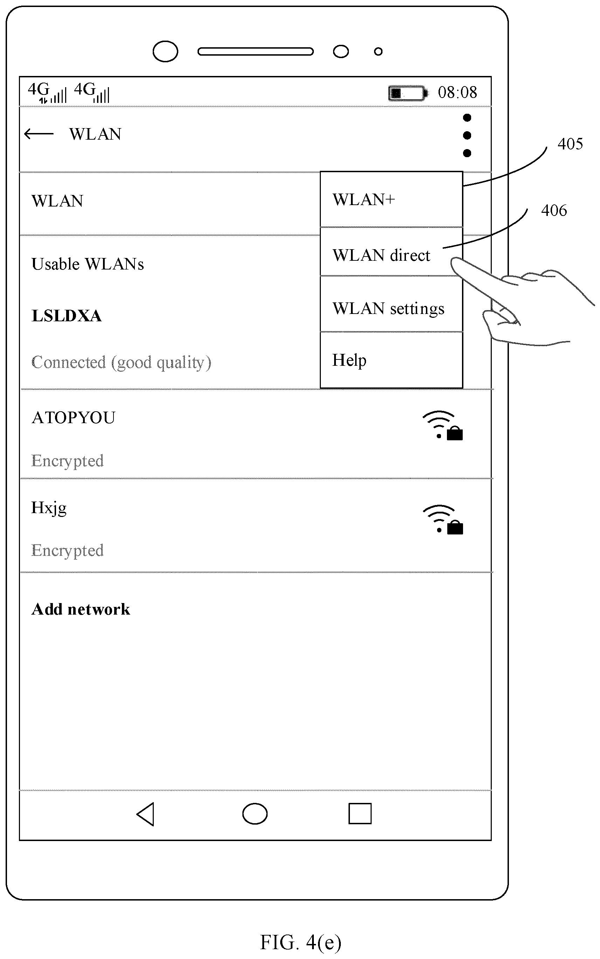

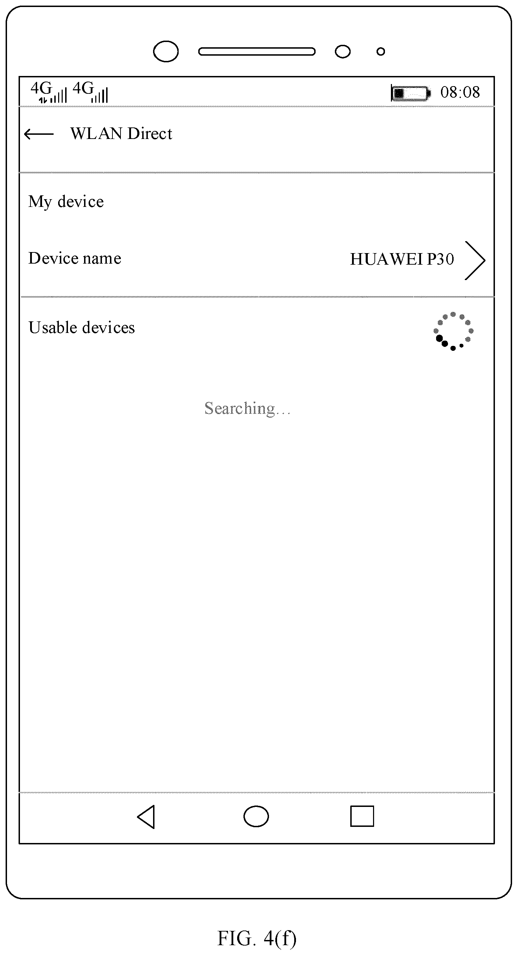

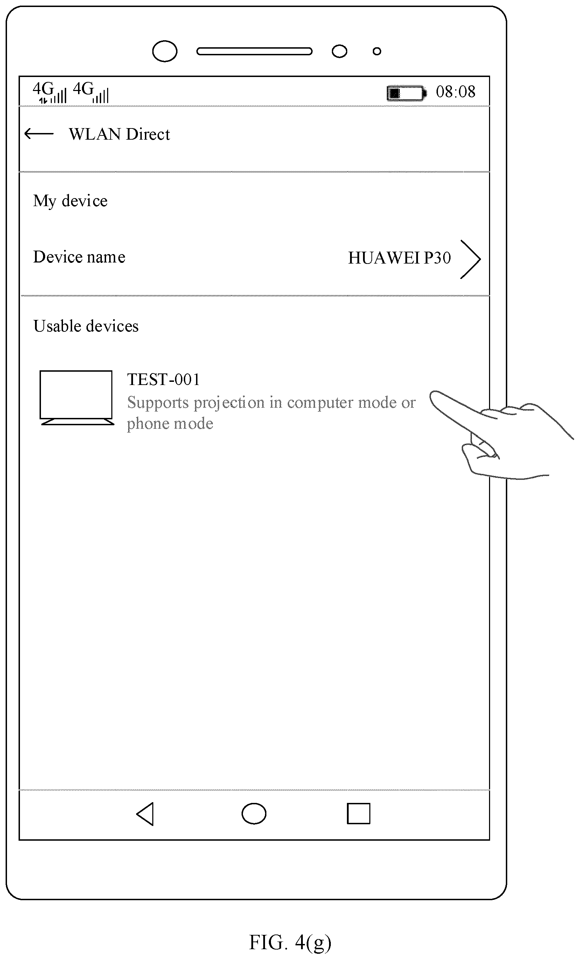

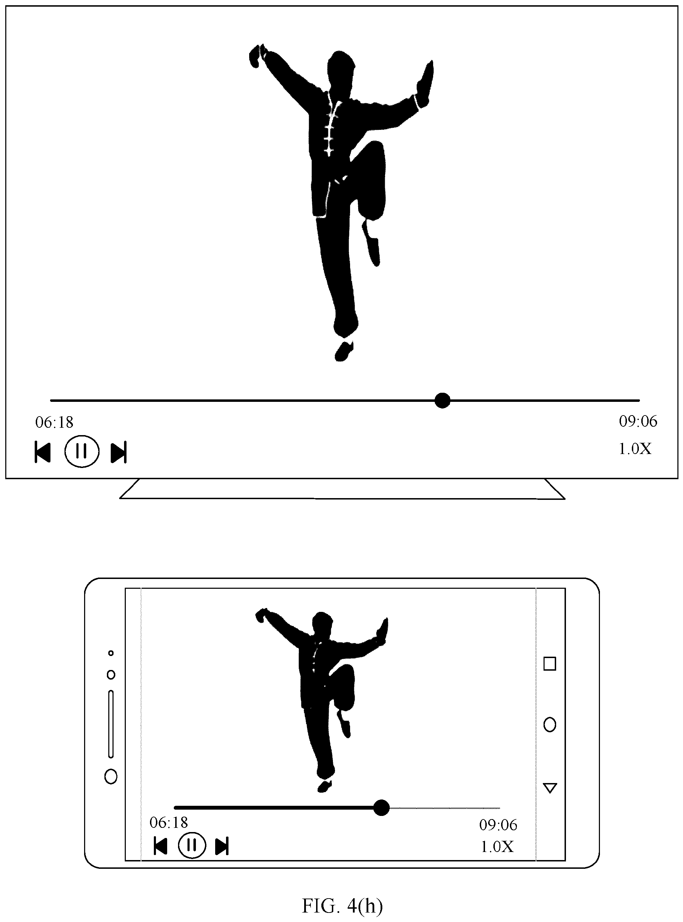

FIG. 4 shows another set of GUIs according to an embodiment of this application. Another process of screen projection from a mobile phone to a smart TV is shown in FIG. 4(a) to FIG. 4(h).

It should be understood that FIG. 4 shows how the mobile phone is connected to the smart TV through the WLAN direct application.

Referring to a GUI page shown in FIG. 4(a), the GUI page is a desktop of the mobile phone. When the mobile phone detects an operation of tapping the Settings icon 401 by a user, a GUI page shown in FIG. 4(b) is displayed.

Referring to the GUI page shown in FIG. 4(b), the GUI page is a desktop of the mobile phone. This GUI page includes icons of a plurality of application programs, including the Settings icon 401. When the mobile phone detects an operation of tapping the Settings icon 401 by a user, it can start to set related functions of the mobile phone, and display a GUI page shown in FIG. 4(b). Referring to the GUI page shown in FIG. 4(b), the GUI page is a Settings interface of the mobile phone. This GUI page includes a plurality of function options, including Wireless & networks, Device connection, Desktop and wallpaper, and Sounds. The user can perform WLAN, SIM management, and wireless network settings through the wireless and network function. When the mobile phone detects an operation of tapping the Wireless & networks 402 by a user, a GUI page shown in FIG. 4(c) is displayed.

Referring to the GUI page shown in FIG. 4(c), the GUI page is an interface for setting wireless and network functions of the mobile phone. This GUI page includes a plurality of function options under Wireless & networks, including Airplane mode, WLAN, Mobile network, SIM management, and the like. When the mobile phone detects an operation of tapping the WLAN 403 by a user, a GUI page as shown in FIG. 4(d) is displayed.

Referring to the GUI page shown in FIG. 4(d), the GUI page is an interface for setting the WLAN function of the mobile phone. This function setting interface includes a WLAN on/off control, a list of available WLANs, add network, and a control 404. When the mobile phone detects an operation of tapping the control 404 by a user, a GUI page shown in FIG. 4(e) is displayed. Referring to the GUI page shown in FIG. 4(e), the GUI page is another interface for setting the WLAN function of the mobile phone. This interface includes a function window 405, where the function window 405 includes a "WLAN+" control for adding a WLAN, a WLAN direct control 406, a WLAN setting control, and Help. When the mobile phone detects an operation of tapping the WLAN direct control 406 by a user, a GUI page shown in FIG. 4(f) is displayed.

Referring to the GUI page shown in FIG. 4(f), the GUI page is a display interface of the WLAN direct function. This display interface may display a device name of the user as "HUAWEI P30", and search for usable devices near the mobile phone.

Referring to a GUI page shown in FIG. 4(g), the GUI page is another display interface of the WLAN direct function. This display interface may show a result of searching for devices near the mobile phone, where a smart TV with a device name of "TEST-001" in the nearby devices is detected by the mobile phone. When the mobile phone detects an operation of tapping the device name of the smart TV by a user, the mobile phone may be connected to the smart TV by using Wi-Fi direct.

Referring to a GUI page shown in FIG. 4(h), the GUI page is a display interface shown on the smart TV to which the mobile phone has performed a projection after the mobile phone is connected to the smart TV As shown in FIG. 4, when the mobile phone is playing a video, the smart TV may also play the corresponding video on the mobile phone.

It should be understood that as shown in FIG. 4(h), the mobile phone may be placed horizontally or vertically, and the video may be displayed in full screen mode or non-full screen mode on the corresponding smart TV This may be related to the player of the mobile phone.

It should be understood that the GUI page shown in FIG. 3(e) is an example of using a mobile phone to project a desktop of the mobile phone onto a smart TV, the GUI page shown in FIG. 4(h) is an example of using a mobile phone to project a video onto a smart TV, and the embodiments of this application are not limited thereto. For example, a mobile phone may also project a picture, text (for example, memo), a document (for example, a word document), a web page, and other information to a smart TV

It should be understood that the smart TV shown in FIG. 3(e)-1 and FIG. 4(h) may perform P2P listening after being powered on, so that the user is not required to perform cumbersome operations on the smart TV to enable the P2P listening. This helps improve the degree of intelligence of electronic devices, reduces user's learning costs, and improves user experience.

In this embodiment of this application, the smart TV may not enable the P2P listening after power-on, but enable the P2P listening after detecting a tap on a P2P application by a user.

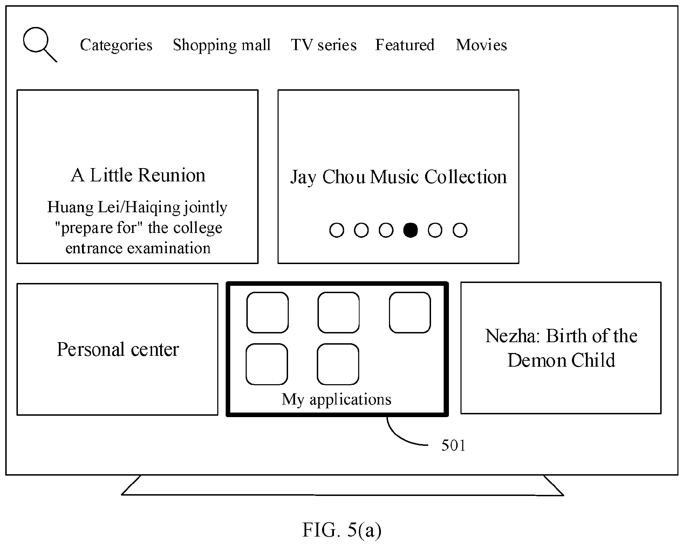

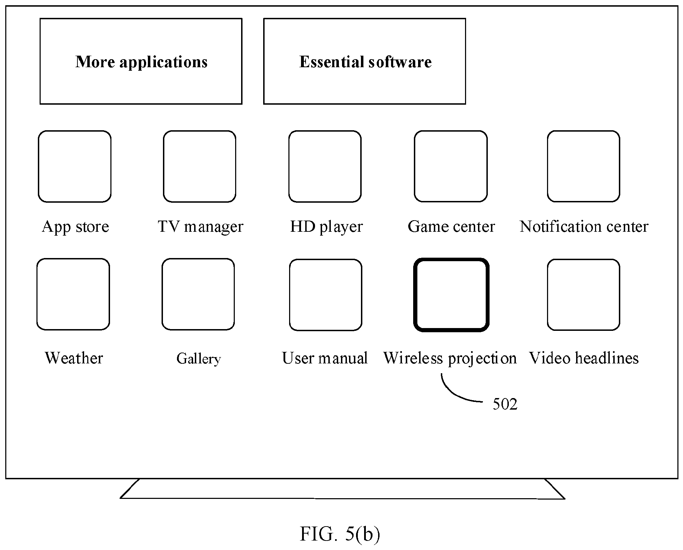

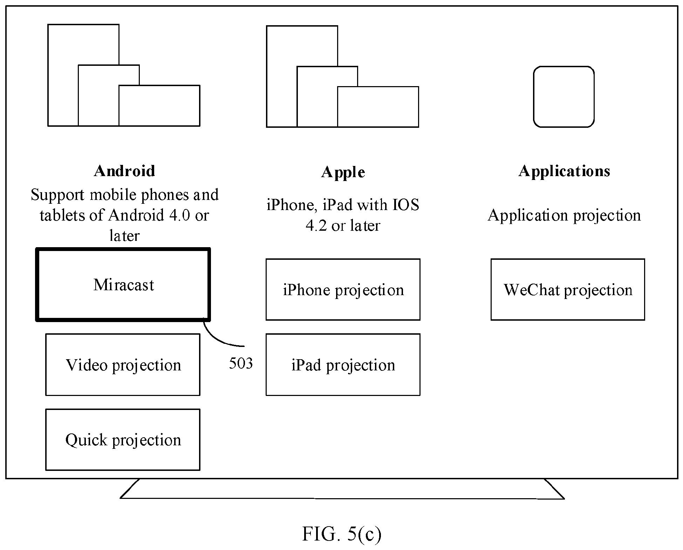

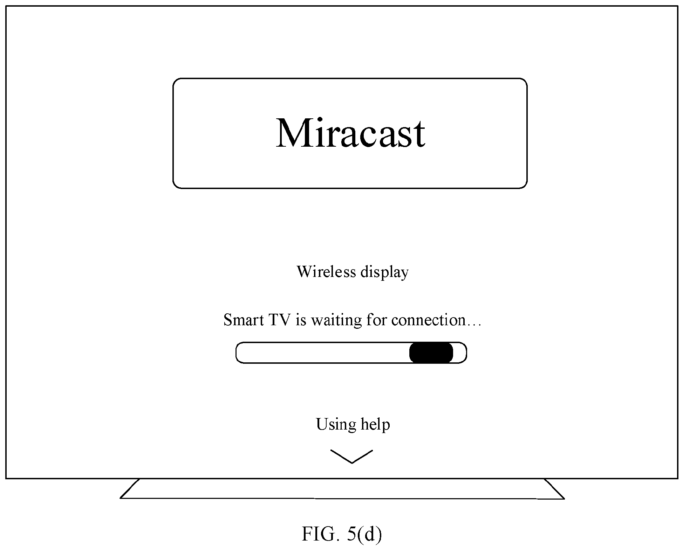

FIG. 5 shows another set of GUIs according to an embodiment of this application. FIG. 5(a) to FIG. 5(d) shows a process in which a smart TV performs P2P listening after detecting an operation of tapping a P2P application by a user.

Referring to a GUI page shown in FIG. 5(a), the GUI page is a start interface of the mobile phone. The smart TV may display a start interface shown in FIG. 5(a) after detecting an operation of booting the mobile phone by a user. This start interface includes entries for categories, shopping malls, TV series, featured, and movies, and may also display some recently popular TV series and movies, such as *A Little Reunion,* and *Nezha: Birth of the Demon Child.* This start interface may also include entries for Personal center and My applications. When the smart TV detects an operation of tapping My applications 501 by a user, a GUI page shown in FIG. 5(b) is displayed. It should be understood that the user may select content in the start interface by using a remote controller, or may tap corresponding content on the screen of the smart TV

Referring to the GUI page shown in FIG. 5(b), the GUI page is a display interface of "My applications". This display interface includes entries for More applications and Essential software. This display interface may also show a plurality of application programs, such as App store, TV manager, HD player, game center, notification center, weather, album, user manual, wireless projection 502, and video headlines. When the smart TV detects an operation of tapping the Wireless projection application 502 by a user, a GUI page shown in FIG. 5(c) is displayed.

Referring to the GUI page shown in FIG. 5(c), the GUI page is a display interface of the Wireless projection application on the smart TV This display interface includes entries for Android, Apple, and Application projection. The smart TV can support mobile phones and tablets with Android 4.0 or later for screen projection, and support iPhones and iPads with IOS 4.2 or later for screen projection. The smart TV can also support application (for example, WeChat) projection. When the smart TV detects an operation of tapping the Miracast application 503 by a user, a GUI page shown in FIG. 5(d) is displayed.

Referring to the GUI page shown in FIG. 5(d), the GUI page is a P2P listening interface of the smart TV This P2P listening interface displays a message "the smart TV is waiting for connection", which means that the smart TV is in a listen phase, waiting for other devices to discover the smart TV

For example, with reference to FIG. 3(c), after the mobile phone detects an operation of tapping the control 302 by a user, the mobile phone may scan for a P2P device. At a particular moment, the mobile phone transmits a probe request frame to the smart TV, the smart TV that is performing P2P listening may return a probe response to the mobile phone, and then the mobile phone may display the GUI page shown in FIG. 3(d).

For example, with reference to FIG. 4(f), after the mobile phone detects an operation of tapping the control 406 by a user, the mobile phone may scan for a P2P device. At a particular moment, the mobile phone transmits a probe request frame to the smart TV, the smart TV that is performing P2P listening may return a probe response to the mobile phone, and then the mobile phone may display the GUI page shown in FIG. 4(g).

It should be understood that after the mobile phone and the smart TV are connected, the mobile phone may project a screen to the smart TV, or may transmit information to the smart TV In this case, the mobile phone may be connected to the smart TV in mobile phone mode by default. When the mobile phone detects an operation of switching to computer mode by the user, the smart TV and the mobile phone may alternatively be connected in computer mode.

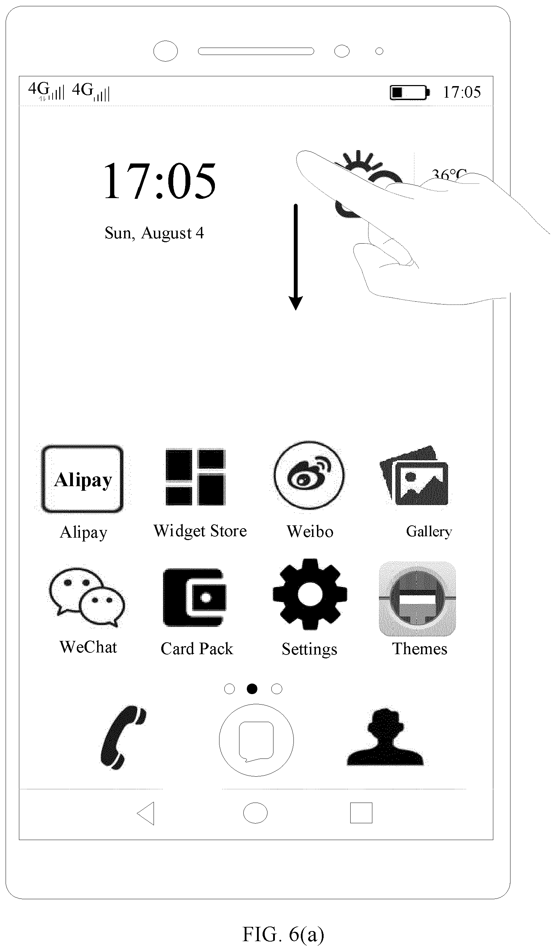

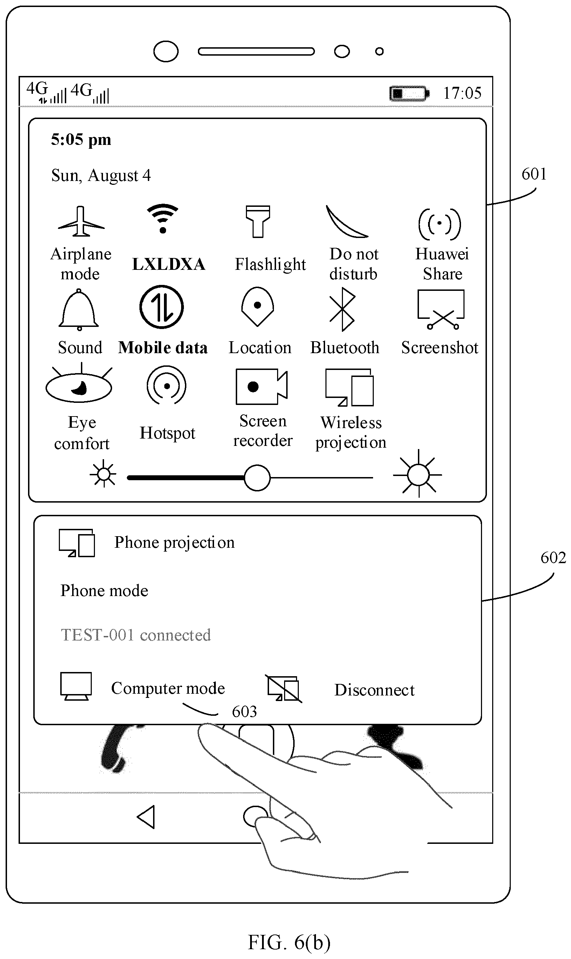

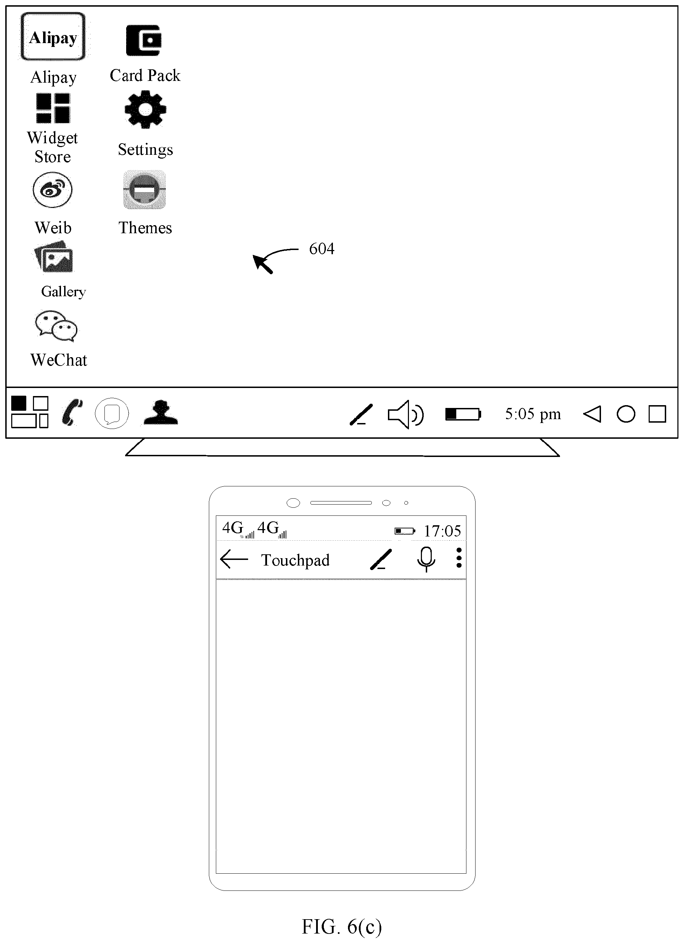

FIG. 6 shows another set of GUIs according to an embodiment of this application. FIG. 6(a) to FIG. 6(c) show a process in which a mobile phone switches from mobile phone mode to computer mode during screen projection of the mobile phone.

Referring to a GUI page shown in FIG. 6(a), the GUI page is a desktop of the mobile phone. The desktop of the mobile phone includes a plurality of application programs, such as Alipay, Widget Store, Weibo, Gallery, WeChat, Card Pack, Settings, and Themes. When the mobile phone detects an operation of sliding downward from the top of the desktop by a user, a GUI page shown in FIG. 6(b) is displayed.

Referring to the GUI page shown in FIG. 6(b), the GUI page is a display interface of a drop-down menu of the mobile phone. This display interface includes a function menu bar 601 and a mobile phone projection notification bar 602. The mobile phone projection notification bar shows that the mobile phone is currently connected to the computer in mobile phone mode. When the mobile phone detects an operation of tapping the control 603 by a user, a GUI page shown in FIG. 6(c) is displayed.

Referring to the GUI page shown in FIG. 6(c), the GUI page is an interface showing that the mobile phone is connected to the smart TV in computer mode. The display interface on the mobile phone includes a touch panel, and the user checks his/her operation so as to control a cursor 604 on the smart TV to perform a corresponding operation. The smart TV may display applications on the mobile phone, such as Alipay, Widget Store, Weibo, Gallery, WeChat, and Card Pack, and the smart TV may also display battery power, time, volume, and the like of the mobile phone.

In computer mode, a touch panel may be displayed on the screen of the mobile phone, and the user may perform operations such as tapping, double-tapping, and sliding on the touch panel. In response to such an operation, the cursor 604 on the smart TV may perform a corresponding operation.

In this embodiment of this application, in mobile phone mode, the mobile phone can normally display the current display interface, while the smart TV can display the display interface of the corresponding mobile phone at the same time, as shown in FIG. 3(e) or FIG. 4(h). In computer mode, the smart TV may display some or all application programs on the mobile phone, and the mobile phone displays a touch panel. After detecting a user's operation on the touch panel, the mobile phone may control the cursor on the smart TV to move. In this case, the mobile phone is equivalent to a mouse.

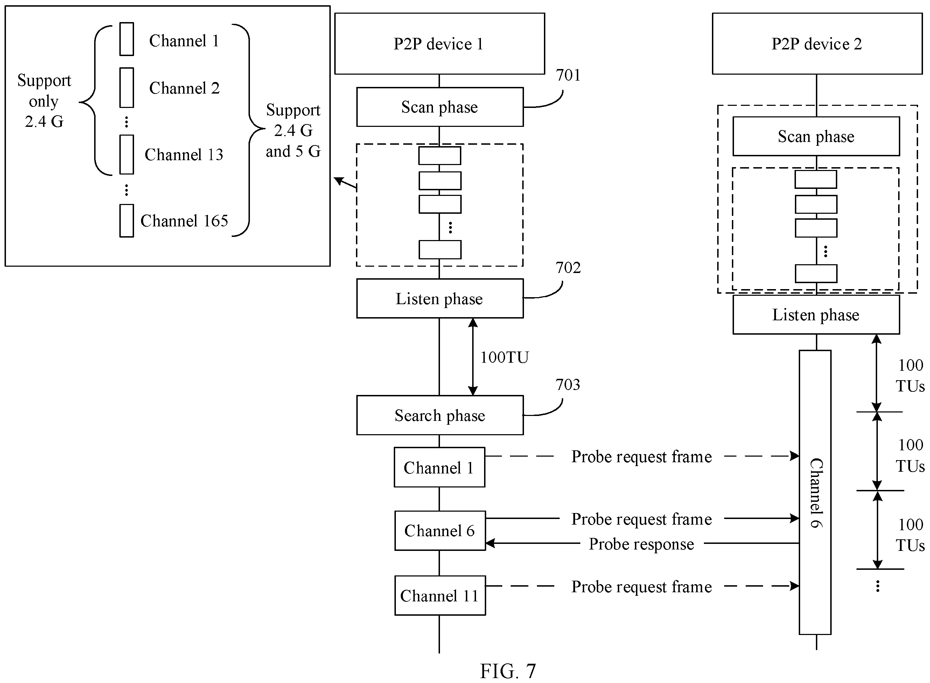

Before describing a specific process of wireless projection from a mobile phone to a smart TV, a Wi-Fi P2P technology is first described with reference to FIG. 7. For example, FIG. 7 shows a one-to-one (a P2P device 1 and a P2P device 2) process, that is, one GO to one GC. The process may alternatively be a one-to-many process, that is, one GO to many GCs.

S701. The P2P device 1 enters a scan (scan) phase.

For example, as shown in FIG. 3(b), after detecting an operation of tapping the control 302 by the user, the mobile phone enters the scan phase.

For example, as shown in FIG. 4(e), after detecting an operation of tapping the control 406 by the user, the mobile phone enters the scan phase.

Both the P2P device 1 and the P2P device 2 can transmit a probe request (probe request) frame during the scan phase, and the P2P device 1 and the P2P device 2 can transmit a probe request frame on all bands that they support, searching for all nearby devices or network information. When the P2P device 1 has transmitted a probe request frame on a channel and received a probe response frame, it means that the P2P device 1 has detected a sink device, and the P2P device 1 can display information about the detected device to the user through the display screen.

For example, as shown in FIG. 7, if the P2P device 1 supports only 2.4 GHz band, the P2P device 1 can transmit a probe request frame on each of channels 1 to 13.

For example, as shown in FIG. 7, if the P2P device 1 supports 2.4 GHz band and 5 GHz band, the P2P device 1 can transmit a probe request frame on each of channels 1 to 165.

It should be understood that channels 1 to 165 may not be continuous channels, and channels with different channel numbers may be in a same band, or may be in different bands.

It should also be understood that 2.4 GHz and 5 GHz bands are taken as examples for description in the embodiments of this application, and other different bands, such as 5 GHz and 60 G bands, may also be used. The difference between 2.4 GHz band and 5 GHz band is that 2.4 GHz band and 5 GHz band are two different frequency spectra used by electronic devices to transmit radio frequency signals. 2.4 GHz and 5 GHz cover different spectrum bandwidths. The band of 2.4 GHz signals ranges from 2.4 GHz to 2.4835 GHz, with a total bandwidth of 83.5 MHz; and the spectrum range of 5 GHz signals ranges from 4.910 GHz to 5.875 GHz, with a total bandwidth of 965 MHz. For example, 13 channels from channel 1 to channel 13 can be 2.4 GHz channels, while channel 36, channel 40, channel 44, channel 48, channel 53, channel 60, channel 120, channel 128, channel 149, channel 153, channel 157, channel 161, channel 165, and the like can be 5 GHz channels.

It should be understood that if the P2P device 1 supports only 2.4 GHz band, during the scan phase, the P2P device 1 can transmit a probe request frame only on each of the 13 channels from channel 1 to channel 13; if the P2P device 1 supports 2.4 GHz band and 5 GHz band, the P2P device 1 can transmit a probe request frame on each of the aforementioned channels 1 to 165.

It should also be understood that after the P2P device 2 is powered on, or after an operation of tapping the Miracast application by the user is detected, the P2P device 2 may alternatively go through the scan phase first. In this embodiment of this application, as an example of a large-screen device, the P2P device 2 may enter a listen phase after completion of the scan phase. Alternatively, when the P2P device 2 is a large-screen device, the scan phase may be skipped, and the P2P device 2 starts entering a listen phase for continuous listening when it is powered on or after a user taps a corresponding P2P application. This is because a large-screen device may not project its interface to another device, and only another device may project its interface to the large-screen device. Therefore, a large-screen device may not need to discover other devices, and may not go through the scan phase, and only go through the listen phase.

It should also be understood that if during the scan phase, the P2P device 1 discovers no sink device, or the P2P device 1 has discovered a sink device, but has not detected an operation of tapping the sink device by a user, the P2P device 1 may enter a discovery phase after completion of the scan phase, where the discovery phase of the P2P device 1 may include a listen (listen) phase and a search (search) phase.

S702. The P2P device 1 enters a listen phase.

For the listen phase, the P2P protocol also specifies a time length during which a device is in the listen phase, which is N times that of 100 TUs, where N is a random positive integer. For example, N may be any one of integers 1, 2, and 3. The reason why N is a random positive integer is to prevent the P2P device 1 and the P2P device 2 from entering the listen phase simultaneously, and entering the search phase simultaneously after waiting for a same time. If so, both devices cannot process the probe request frame from each other.

It should be understood that before the scan phase, the P2P device 1 and the P2P device 2 may each determine a channel to be listened on. As shown in FIG. 7, a channel on which the P2P device 1 performs listening is channel 1, and a channel on which the P2P device 2 performs listening is channel 6.

S703. The P2P device 1 enters the search phase to search for P2P devices, and the P2P device 2 continues to stay in the listen phase.

For example, as shown in FIG. 7, if the P2P device 1 supports only 2.4 GHz band, the P2P device 1 can transmit the probe request frame only on channel 1, channel 6, and channel 11 after entering the search phase. When the P2P device 1 transmits a probe request frame on channel 6, because the P2P device 2 is performing listening on channel 6 at this time, after the P2P device 2 has received the probe request frame on channel 6, the P2P device 2 may transmit a probe response (probe response) frame to the P2P device 1. After receiving the probe response frame, the P2P device 1 may display information about the P2P device 2 to the user, as shown in FIG. 3(d) and FIG. 4(g). After detecting an operation of tapping the device information about the P2P device 2 by a user, the P2P device 1 may connect to the P2P device 2.

For example, if the P2P device 1 supports 2.4 GHz band and 5 GHz band, the P2P device 1 can separately transmit the probe request frame on channel 1, channel 6, and channel 36 after entering the search phase.

It should be understood that in this embodiment of this application, the probe request frame transmitted by one device can be received by another device only when the two devices are in a same band. Further, the probe request frame transmitted by one device can be received by another device only when the two devices are in a same band and have channels with a same channel number.

It should also be understood that in addition to on the same band, the channels with the same channel number have a same center frequency or operating band.

It should also be understood that after the P2P device 1 has detected the P2P device 2, a next step is to tap to connect. A first step of tapping to connect is to identify their respective roles, that is, which device serves as a GO, and which device serves as a GC. In the Wi-Fi P2P technology, the roles can be determined through interaction by using additional action (action) frames. For the process, reference may be made to the existing Wi-Fi P2P technology, and details are not described herein for brevity.

For the existing Wi-Fi P2P technology, if a current large-screen device is connected to a 5 GHz channel through Wi-Fi, an electronic device that supports only 2.4 GHz cannot discover the large-screen device.

For example, Table 1 shows a P2P discovery scenario for a mobile phone that supports 2.4 GHz and 5 GHz and a mobile phone that supports only 2.4 G.

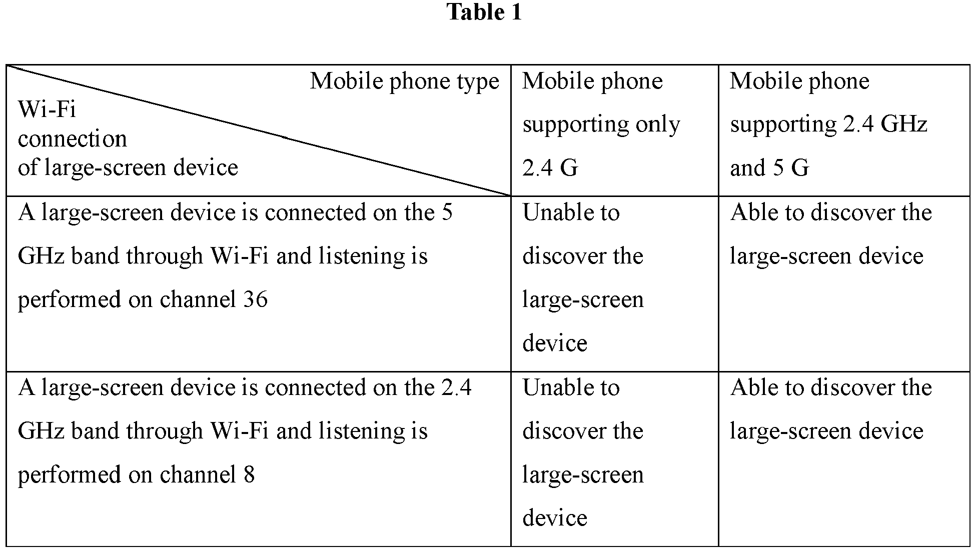

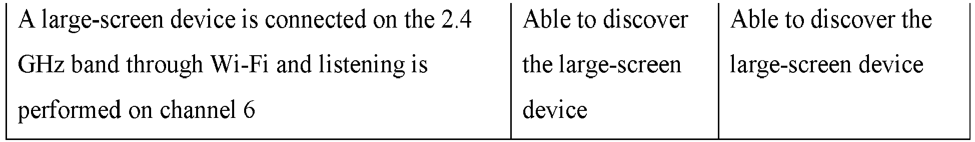

For example, Table 2 shows replies from a large-screen device when a mobile phone that supports 2.4 GHz transmits a packet on each of channel 1, channel 6, channel 8, and channel 11.

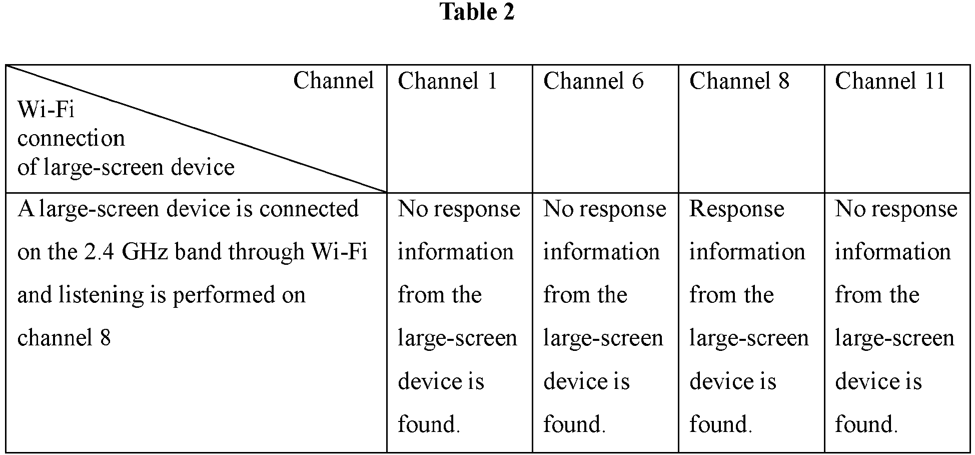

For example, Table 3 shows replies from a large-screen device when a mobile phone that supports 2.4 GHz transmits a packet on each of channel 1 and channel 6.

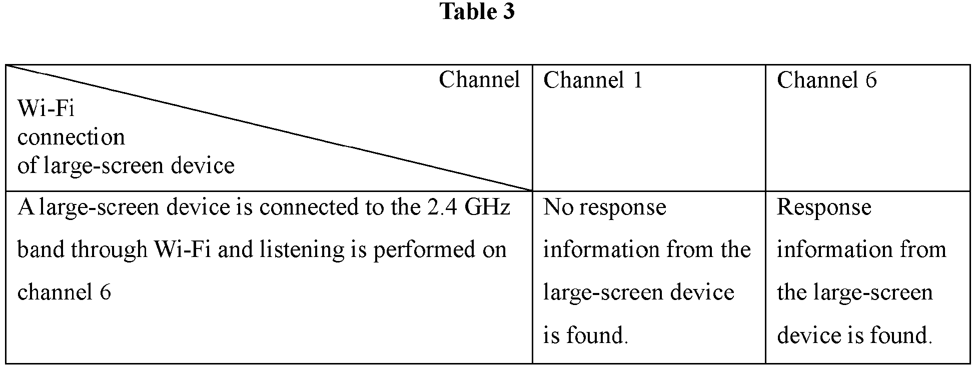

It should be understood that Tables 1 to 3 above show that the mobile phone can obtain a probe request response from the large-screen device only when it transmits a probe request frame on a channel with a same number and in a same band as a channel of the large-screen device. Therefore, if a mobile phone supports only a low band while a large-screen device is connected to a high band, the mobile phone cannot discover the large-screen device, so that the user cannot project information on the mobile phone to the large-screen device in real time, affecting user experience. An embodiment of this application provides an information transmission method, making it possible for any P2P-enabled electronic device to realize real-time screen projection, and allowing users to experience convenience and quickness of P2P real-time screen projection.

A detailed process of information transmission between a first electronic device and a second electronic device in an embodiment of this application is described below.

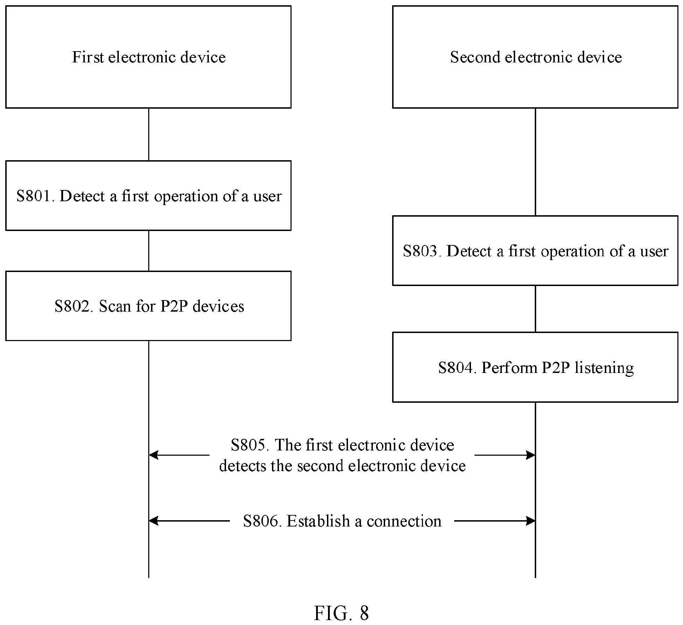

FIG. 8 is a schematic flowchart of a method 800 for information transmission according to an embodiment of this application. As shown in FIG. 8, the method 800 includes the following steps. 5801. A first electronic device detects a first operation of a user.

For example, the first operation may be an operation of tapping a P2P application by the user. For example, as shown in FIG. 3(b), the first operation is an operation of tapping the control 302 by the user.

For example, as shown in FIG. 4(e), the first operation is an operation of tapping the control 406 by the user.

In one embodiment, the P2P application includes a Miracast application and a Wi-Fi direct application. The control 302 may be an entry of the Miracast application, and the control 406 may be an entry of the Wi-Fi direct application.

S802. The first electronic device starts scanning for P2P devices in response to the first operation. For example, for the P2P device 1 shown in FIG. 7, after the user taps the Miracast application or the Wi-Fi direct application, the P2P device 1 starts to enter the scan phase, the listen phase, and the search phase in sequence.

S803. A second electronic device detects a second operation of the user.

S804. The second electronic device starts performing P2P listening in response to the second operation.

It should be understood that in this embodiment of this application, it is assumed that the first electronic device may be a source device, and that the second electronic device may be a sink device, such as the smart TV shown in FIG. 3(e)-1 and the smart TV shown in FIG. 4(h). When the smart TV is powered on, the smart TV may automatically start a P2P application, or when the smart TV detects an operation of tapping the P2P application by the user, the smart TV starts the P2P application.

It should also be understood that after the smart TV starts the P2P application, it can enter the scan phase and the listen phase in sequence, such as the P2P device 2 shown in FIG. 7.

It should be understood that there is no actual sequential order between S801 to S802 and S803 to S804.

S805. The first electronic device detects the second electronic device.

In one embodiment, the first electronic device supports a first band, the second electronic device is connected to a second band, and a spectrum bandwidth covered by the first band is less than a spectrum bandwidth covered by the second band.

The second electronic device can perform time-division listening in the first band and the second band.

For example, the first electronic device is a mobile phone, and the second electronic device is a smart TV The mobile phone supports only the 2.4 GHz band, while the smart TV is connected to a channel (for example, channel 36) of the 5 GHz band through Wi-Fi. The smart TV stays and performs listening on channel 36, and therefore, when the mobile phone transmits a probe request frame to the smart TV over each of channels 1 to 13 during the scan phase, the smart TV does not return a probe response to the mobile phone. Alternatively, the smart TV does not return a probe response to the mobile phone when the mobile phone transmits a probe request frame to the smart TV over channel 1, channel 6, or channel 11 during the scan phase.

In this embodiment of this application, for a large-screen device connected to a channel (for example, channel 36) of the 5 GHz band through Wi-Fi, a time-division listening manner may be used.

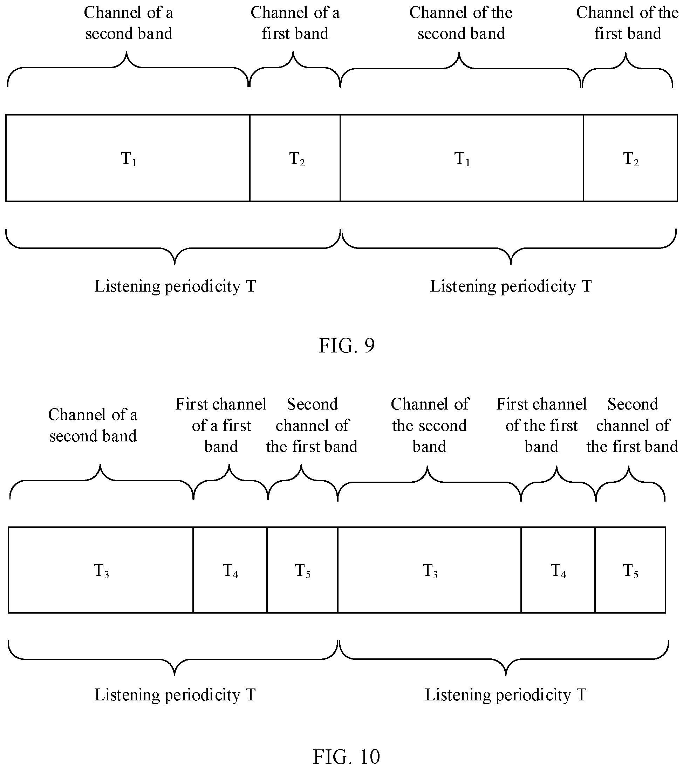

FIG. 9 is a schematic diagram of a time-division listening manner according to an embodiment of this application. As shown in FIG. 9, a smart TV may perform listening at a periodicity T. The smart TV performs listening on a channel (for example, channel 36) of a second band within a time period T₁ in the periodicity T, and performs listening on a channel (for example, any one of channel 1, channel 6, and channel 11) of a first band within a time period T₂ in the periodicity T, where T₁<T, T₂<T, and T₁+T₂=T.

It should be understood that the channel of the first band may be a social channel. The social channel in the embodiments of this application may be a channel of 2.4 GHz band. For example, the social channel is any one of channel 1, channel 6, or channel 11. Alternatively, the channel of the first band may be a nonsocial channel, for example, channel 7, or channel 8.

With a method in the prior art, the smart TV can continuously stay at and perform listening on channel 36 within a listening periodicity, resulting in that the mobile phone that supports only 2.4 GHz cannot detect the smart TV

With the method of this embodiment of this application, the smart TV connected to a channel of 5 GHz band through Wi-Fi can perform listening on different channels in one listening periodicity, so that the smart TV can detect, on the social channel within a listening periodicity, a probe request frame transmitted by the mobile phone, and the smart TV can return a probe response to the mobile phone, thereby ensuring that the mobile phone can discover the smart TV

### In one embodiment, T₁>T₂.

T₁>T₂ can ensure that within one detection periodicity, the time length for which the smart TV stays at and performs listening on the channel of 5 GHz band is greater than the time length for which the smart TV stays at and performs listening on the social channel. This can ensure that the smart TV can detect the probe request frame on the social channel without affecting Wi-Fi packet exchange between the smart TV and the AP, so that the use of the Internet access function of the smart TV by the user (for example, for movie watching and binge-watching) is not affected.

It should be understood that the foregoing embodiment is described in terms of a smart TV connected to a channel of 5 GHz band (for example, channel 36) through Wi-Fi, and the channel on which the smart TV performs listening may be the same as a channel over which the smart TV is connected to the AP. When Wi-Fi (or Bluetooth) is enabled to connect to an AP, the smart TV may detect one or more APs. In this case, the smart TV can learn a channel of each of the one or more APs (the channels of the APs may be the same or different). When the smart TV is connected to an AP, it may be determined that the smart TV may perform listening on a channel corresponding to the AP.

It should also be understood that after the smart TV is connected to an AP, it may receive packets transmitted by the AP over Wi-Fi, so that the user can use the smart TV to perform operations such as video watching, live broadcasting, and web browsing.

FIG. 10 is a schematic diagram of a time-division listening manner according to an embodiment of this application. As shown in FIG. 10, a smart TV may perform listening at a periodicity T. The smart TV performs listening on a channel (for example, channel 36) of a second band within a time period T₃ in the periodicity T, performs listening on a first channel (for example, channel 1) of a first band within a time period T₄ in the periodicity T, and performs listening on a second channel (for example, channel 6) of the first band within a time period T₅ in the periodicity T, where T₃<T, T₄<T, T₃<T, and T₃+T₄+T₅=T.

It should be understood that the periodicity in the time-division listening shown in FIG. 10 may be the same as or different from the periodicity in the time-division listening shown in FIG. 9, and this is not limited in this application.

It should also be understood that the first channel of the first band may be a social channel, or may be a nonsocial channel of the first band, such as channel 7 or channel 8; and the second channel of the first band may be a social channel, or may be a nonsocial channel in the first band, such as channel 7 or channel 8.

It should be understood that for the description of the listening manner in FIG. 10, reference may be made to the foregoing embodiment, and details are not described herein for brevity.

It should also be understood that the smart TV may perform listening at a periodicity T, where the smart TV performs listening on a channel (for example, channel 36) of a second band within a time period T₆ in the periodicity T, performs listening on a first channel (for example, channel 1) of a first band within a time period T₇ in the periodicity T, performs listening on a second channel (for example, channel 6) of the first band within a time period T₈ in the periodicity T, and performs listening on a third channel (for example, channel 11) of the first band within a time period T₉ in the periodicity T, where T₆<T, T₇<T, T₈<T, T₉<T, and T₆+T₇+T₈+T₉=T.

In one embodiment, the first electronic device supports a first band, and the second electronic device is connected to a channel of the first band.

In one embodiment, the first electronic device supports a first band, and the second electronic device is connected to a nonsocial channel of the first band.

According to the invention, the first band is a 2.4 GHz band.

For example, the first electronic device is a mobile phone, and the second electronic device is a smart TV The mobile phone supports 2.4 GHz band, the smart TV is connected to an AP through Wi-Fi, a current channel of the AP is a channel (for example, channel 7) of 2.4 GHz band, then the smart TV may be connected to and perform listening on channel 7. Because the smart TV stays at and performs listening on channel 7, when the mobile phone transmits a probe request frame to the smart TV over each of channels 1 to 13 during the scan phase, the smart TV may return a probe response frame to the mobile phone if the smart TV is performing listening when the mobile phone transmits a probe request frame over channel 7.

However, if the smart TV is not performing listening when the mobile phone transmits a probe request frame over channel 7, the mobile phone cannot discover the large-screen device during the scan phase. After entering the search phase, the mobile phone can only transmit a probe request frame on a social channel (channel 1, channel 6, and channel 11). Because the smart TV is connected to and performs listening on channel 7, the smart TV cannot receive the probe request frame transmitted by the mobile phone. Therefore, in this process, it is only possible for the mobile phone to discover the smart TV during the scan phase, which may increase time for the mobile phone to detect the large-screen device, thereby affecting user experience.

It should be understood that the mobile phone may perform a plurality of scans in the process of discovering the large-screen device, and each scan may include one scan phase and a plurality of (for example, 6 to 8) search phases. In the process of each scan, if the mobile phone detects no smart TV during the scan phase, the smart TV may not be detected in the search phase. In this case, it is only possible for the mobile phone to discover the large-screen device during the scan phase of a next scan.

In this embodiment of this application, if the smart TV finds that the current channel of the AP is a nonsocial channel, the smart TV may alternatively perform time-division listening.

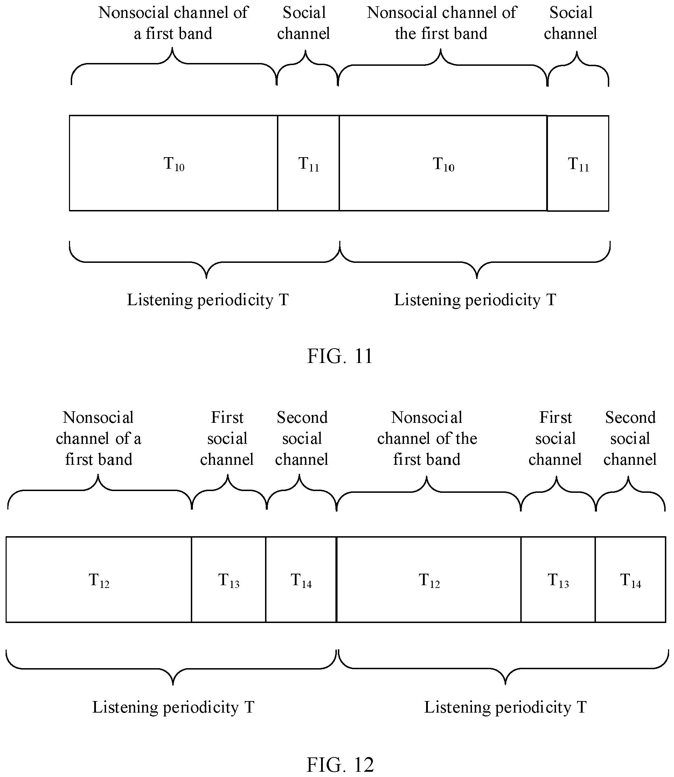

FIG. 11 is a schematic diagram of another time-division listening manner according to an embodiment of this application. As shown in FIG. 11, a smart TV performs listening at a periodicity T. The smart TV performs listening on a nonsocial channel (for example, channel 7) of a first band within a time period T₁₀ in the periodicity T, and performs listening on a social channel (for example, any one of channel 1, channel 6, and channel 11) of the first band within a time period T₁₁ in the periodicity T, where T₁₀<T, T₁₁<T, and T₁₀+T₁₁=T.

According to the invention, T₁₀>T₁₁.

T₁₀>T₁₁ can ensure that within one detection periodicity, the time length for which the smart TV stays at and performs listening on the nonsocial channel of 2.4 GHz band is greater than the time length for which the smart TV stays at and performs listening on the social channel. This can ensure that the smart TV can detect the probe request frame on the social channel without affecting Wi-Fi packet exchange between the smart TV and the AP, so that the use of the Internet access function of the smart TV by the user (for example, for movie watching and binge-watching) is not affected.

It should be understood that the periodicity in the time-division listening shown in FIG. 11 may be the same as or different from the periodicity in the time-division listening shown in FIG. 9, and this is not limited in this application.

For example, FIG. 12 is a schematic diagram of another time-division listening manner according to an embodiment of this application. As shown in FIG. 12, a smart TV may perform listening at a periodicity T. The smart TV performs listening on a nonsocial channel (for example, channel 7) of a first band within a time period T₁₂ in the periodicity T, performs listening on a first social channel (for example, channel 1) of social channels of the first band within a time period T₁₃ in the periodicity T, and performs listening on a second social channel (for example, channel 6) of social channels of the first band within a time period T₁₄ in the periodicity T, where T₁₂<T, T₁₃<T, T₁₄<T, and T₁₂+T₁₃+T₁₄=T.

It should be understood that the time-division listening manner may alternatively be: within one periodicity, performing time-division listening on a nonsocial channel (for example, channel 7), a first social channel (for example, channel 1), a second social channel (for example, channel 6), and a third social channel (for example, channel 11).

In this embodiment of this application, in a case that the smart TV is connected to a nonsocial 2.4 GHz band, when performing listening, the smart TV may perform listening on a nonsocial channel and a social channel in a time division manner, which helps to reduce time for the mobile phone to detect the smart TV, reduce waiting time for the user, and improve user experience.

In one embodiment, the first electronic device supports a first band, and the second electronic device is connected to a social channel of the first band.

According to the invention, the first band is a 2.4 GHz band.

For example, the first electronic device is a mobile phone, and the second electronic device is a smart TV The mobile phone supports 2.4 GHz band, the smart TV is connected to an AP through Wi-Fi, a current channel of the AP is a channel (for example, social channel 11) of 2.4 GHz band, then the smart TV may be connected to and perform listening on social channel 11. Because the smart TV stays at and performs listening on channel 11, when the mobile phone transmits a probe request frame to the smart TV over each of channels 1 to 13 during the scan phase, the smart TV may return a probe response frame to the mobile phone if the smart TV is performing listening when the mobile phone transmits a probe request frame over channel 11. Alternatively, the mobile phone may transmit a probe request frame to the smart TV over each of channel 1, channel 6, and channel 11 during the search phase, and the smart TV may return a probe response frame to the mobile phone if the smart TV is performing listening when the mobile phone transmits a probe request frame over channel 11.

It should be understood that if the smart TV is connected to the AP through Wi-Fi and the current channel of the AP is channel 11, the mobile phone and the smart TV may be connected to and perform listening on social channel 11, or may be connected to and perform listening on channel 1 or channel 11. Alternatively, time-division listening may be performed, and the smart TV may perform listening at a periodicity T. The smart TV performs listening on a social channel (for example, channel 1) of a first band within a time period T₁₂ in the periodicity T, and performs listening on a second social channel (for example, channel 11) of social channels of the first band within a time period T₁₃ in the periodicity T.

S806. The first electronic device is connected to the second electronic device, so that the first electronic device can transmit information to the second electronic device.

For example, as shown in FIG. 3(d), after detecting an operation of tapping information about the device by the user, the mobile phone connects to the smart TV

For example, as shown in FIG. 4(g), after detecting an operation of tapping information about the device by the user, the mobile phone connects to the smart TV

In the information transmission method according to this embodiment of this application, the listening manner of the second electronic device is changed, enabling the first electronic device performing scanning in a low band to discover the second electronic device performing listening in a high band, so that the first electronic device and the second electronic device can be connected for information transmission.

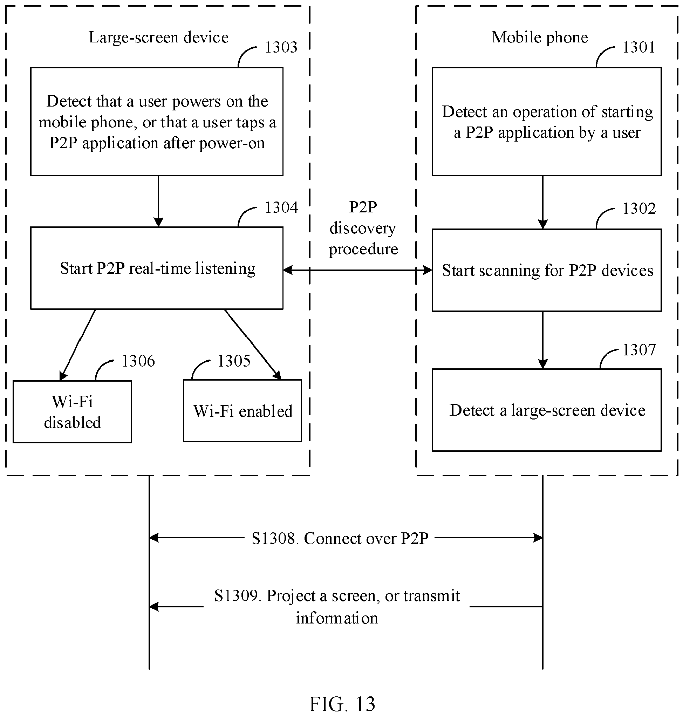

FIG. 13 is a schematic diagram of a process of establishing a P2P connection between a mobile phone and a large-screen device according to an embodiment of this application. As shown in FIG. 13, the process includes the following steps.

S1301. The mobile phone detects an operation of starting a P2P application by a user.

For example, the mobile phone is a mobile phone that supports only 2.4 GHz band.

It should be understood that the P2P applications include Miracast application and WLAN direct application.

For example, as shown in FIG. 3(b), the operation is an operation of tapping the control 302 by the user. When the mobile phone detects the operation of tapping the control 302 by the user, the mobile phone starts the Miracast application to scan P2P devices.

For example, as shown in FIG. 4(e), the operation is an operation of tapping the control 406 by the user. When the mobile phone detects the operation of tapping the control 406 by the user, the mobile phone starts the WLAN direct application to scan P2P devices.

S1302. The mobile phone starts scanning P2P devices in response to the operation of starting the P2P application by the mobile phone.

S1303. The large-screen device detects the user operation.

In one embodiment, the user operation detected by the large-screen device is an operation of powering on the mobile phone by the user, or an operation of tapping a P2P application by the user. S1304. The large-screen device starts P2P real-time listening in response to the operation. S1305. If the large-screen device is connected to a channel of 5 GHz band through Wi-Fi, the large-screen device may perform time-division listening on a channel of 5 GHz band and a channel of 2.4 GHz band.

In one embodiment, the listening manner of the large-screen device may be the listening manner shown in FIG. 9 or FIG. 10.

In one embodiment, the channel of 2.4 GHz band is a social channel, for example, channel 1, channel 6, or channel 11.

S 1306. If the large-screen device is not connected to Wi-Fi, or the large-screen device is connected to a channel of 2.4 GHz band through Wi-Fi, the large-screen device may perform listening on the channel of 2.4 GHz band.

In one embodiment, if the large-screen device is not connected to Wi-Fi, the large-screen device may perform listening on a social channel (any one of channel 1, channel 6, or channel 11).

In one embodiment, if the large-screen device is connected to a social channel (any one of channel 1, channel 6, or channel 11) of 2.4 GHz band through Wi-Fi, the large-screen device may perform listening on the social channel.

In one embodiment, if the large-screen device is connected to a nonsocial channel (for example, channel 7 or channel 8) of 2.4 GHz band through Wi-Fi, the large-screen device may perform time-division listening on a nonsocial channel and a social channel.

For example, for the time-division listening performed by the large-screen device on a nonsocial channel and a social channel, reference may be made to the listening manner shown in FIG. 11 or FIG. 12.

It should be understood that there is no actual sequential order between S1301 to S1302 and S1303 to S1306.

S1307. The mobile phone detects the large-screen device.

For example, if the large-screen device is connected to a channel of 5 GHz band through Wi-Fi, the mobile phone may detect the large-screen device on a channel of 2.4 GHz band.

For example, if the large-screen device is not connected to Wi-Fi, the mobile phone may detect the large-screen device on a social channel.

For example, if the large-screen device is connected to a social channel of 2.4 GHz band through Wi-Fi, the mobile phone may detect the large-screen device on the social channel.

For example, if the large-screen device is connected to a nonsocial channel of 2.4 GHz band through Wi-Fi, the mobile phone may detect the large-screen device on the nonsocial channel or a social channel.

S1308. The mobile phone and the large-screen device are connected over P2P.

For example, the mobile phone may trigger a P2P link connection through the Miracast application. For example, the mobile phone may trigger a P2P link connection through the WLAN direct application.

S1309. The mobile phone projects an interface to the large-screen device, or the mobile phone transmits information to the large-screen device.

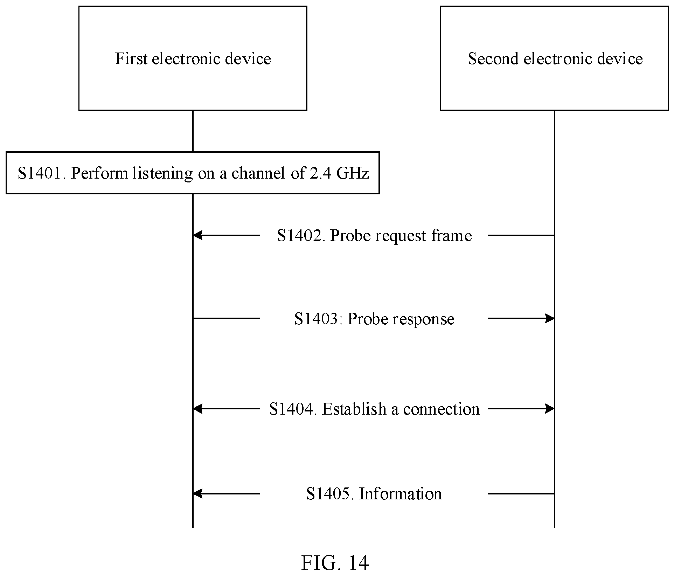

With reference to the foregoing embodiment and related drawings, FIG. 14 shows a method 1400 for information transmission according to an embodiment of this application, and the method 1400 can be applied to a system including a first electronic device and a second electronic device. The first electronic device is connected on a first band, and a spectrum bandwidth covered by a second band is less than a spectrum bandwidth covered by the first band. As shown in FIG. 14, the method 1400 includes the following steps.

S1401. The first electronic device performs listening on a first channel, where the first channel is a channel of the second band.

According to the invention, the first band is 5 GHz, and the second band is 2.4 GHz.

In one embodiment, the first channel is a social channel.

In this embodiment of this application, the first electronic device may perform listening on a social channel, and the second electronic device may discover the first electronic device during a scan phase or a search phase. This can improve scanning efficiency of the second electronic device, thereby improving efficiency of information transmission between the first electronic device and the second electronic device.

S1402. The first electronic device receives request information transmitted by the second electronic device, where the request information is used for requesting establishment of a connection.

According to the invention, the request information is a probe request frame.

S1403. The first electronic device transmits response information to the second electronic device, where the response information is used for indicating establishment of a connection with the second electronic device.

According to the invention, the response information is a probe response.

S1404. The first electronic device establishes a connection with the second electronic device. According to the invention, the connection is a P2P connection.

S1405. The first electronic device receives information transmitted by the second electronic device. In this embodiment of this application, the spectrum bandwidth covered by the first band to which the first electronic device is connected is greater than the spectrum bandwidth of the second band supported by the second electronic device, and the first electronic device can select to perform listening on a channel of the second band during listening. This helps an electronic device that supports only the second band and an electronic device that supports the first band and the second band to discover the second electronic device in real time during scanning, thereby improving efficiency of information transmission between the first electronic device and the second electronic device.

According to the invention, the second electronic device is an electronic device that supports only the second band.

According to the invention, the method further includes: performing, by the first electronic device, listening on a second channel, where the second channel is a channel of the first band.

According to the invention, a time length of listening performed by the first electronic device on the first channel is a first time length, a time length of listening performed by the first electronic device on the second channel is a second time length, and the first time length is less than the second time length.

In this embodiment of this application, the time length of listening performed by the first electronic device on a channel of the first band is greater than the time length of listening performed by the first electronic device on a channel of the second band. This facilitates detection of the first electronic device in real time through scanning by the second electronic device, without affecting an Internet access function (for example, for movie watching and binge-watching) of the second electronic device.

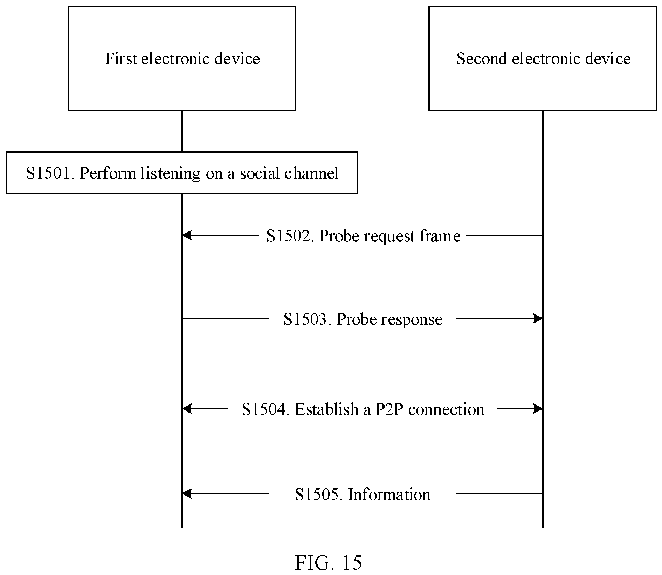

FIG. 15 is a schematic flowchart of a method 1500 for information transmission according to an embodiment of this application, and the method 1500 can be applied to a system including a first electronic device and a second electronic device. The first electronic device is connected on 2.4 GHz, where a channel of an AP to which the first electronic device is connected is a nonsocial channel. As shown in FIG. 15, the method 1500 may include the following steps.

S1501. The first electronic device performs listening on a social channel.

S1502. The first electronic device receives, on the first channel, a probe request frame transmitted by the second electronic device.

S1503. The first electronic device transmits a probe response to the second electronic device.

S1504. The first electronic device establishes a P2P connection with the second electronic device. S1505. The first electronic device receives information transmitted by the second electronic device. In the method of this embodiment of this application, the channel of the AP to which the first electronic device is connected is a nonsocial channel, and the first electronic device may perform listening on a social channel, which helps the second electronic device to discover the first electronic device during a scan phase or a search phase, helping improve efficiency of information transmission between the first electronic device and the second electronic device.

Optionally, the method further includes: performing, by the first electronic device, listening on the nonsocial channel.

In the method of this embodiment of this application, when the first electronic device is connected to a 2.4 GHz nonsocial channel, the first electronic device may perform time-division listening on a social channel and the nonsocial channel, which helps the second electronic device to discover the first electronic device during a scan phase or a search phase, helping improve efficiency of information transmission between the first electronic device and the second electronic device. Optionally, a time length of listening performed by the first electronic device on the social channel is a first time length, a time length of listening performed by the first electronic device on the nonsocial channel is a second time length, and the first time length is less than the second time length.

It can be understood that, to implement the foregoing functions, the electronic devices include corresponding hardware and/or software modules for performing the functions. Algorithm steps of the examples described with reference to the embodiments disclosed in this application may be implemented by hardware or a combination of hardware and computer software in this application. Whether a function is performed by hardware or hardware driven by computer software depends on particular applications and design constraints of the technical solutions. A person of ordinary skill in the art may use different methods to implement the described functions for each particular application with reference to the embodiments, but it should not be considered that the implementation goes beyond the scope of this application.

In the embodiments, the electronic device may be divided into function modules based on the examples of the method. For example, each function module may be obtained through division based on each corresponding function, or at least two functions may be integrated into one processing module. The integrated module may be implemented in a form of hardware. It should be noted that, the module division in the embodiments is an example and is merely logical function division. There may be another division manner in an actual implementation.

When each function module is obtained through division based on each corresponding function,

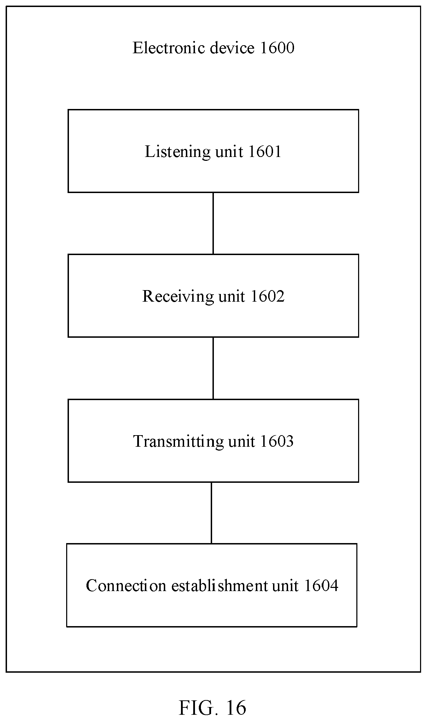

FIG. 16 is a possible schematic composition diagram of the electronic device 1600 used in the foregoing embodiments. As shown in FIG. 16, the electronic device 1600 may include a listening unit 1601, a receiving unit 1602, a transmitting unit 1603, and a connection establishment unit 1604.

The listening unit 1601 may be configured to support the electronic device 1600 in performing the step 1401, step 1501, and the like, and/or other processes of the technology described herein. The receiving unit 1602 may be configured to support the electronic device 1600 in performing the step 1402, step 1502, step 1405, step 1505, and the like, and/or other processes of the technology described herein.

The transmitting unit 1603 may be configured to support the electronic device 1600 in performing the step 1403 and step 1503 to zoom out and/or restore page elements, and the like, and/or other processes of the technology described herein.

The connection establishing unit 1604 may be configured to support the electronic device 1600 in performing the step 1404, step 1504 to zoom out and/or restore page elements, and the like, and/or other processes of the technology described herein.

It should be noted that all related content of the steps in the foregoing method embodiments may be cited in function descriptions of corresponding function modules. Details are not described herein again.

The electronic device in the embodiments is configured to perform the information transmission method, and therefore effects that are the same as those of the foregoing implementation method can be achieved.

When an integrated unit is used, the electronic device may include a processing module, a storage module, and a communication module. The processing module may be configured to control and manage actions of the electronic device, for example, may be configured to support the electronic device in performing the steps that are performed by the foregoing units. The storage module may be configured to support the electronic device in storing program code and data, and the like. The communication module may be configured to support the electronic device in communication with another device.

The processing module may be a processor or controller, which may implement or perform various example logical blocks, modules, and circuits described with reference to content disclosed in this application. Alternatively, the processor may be a combination of processors implementing a computing function, for example, a combination of one or more microprocessors, or a combination of a digital signal processor (digital signal processor, DSP) and a microprocessor. The storage module may be a memory. The communication module may specifically be a device that interacts with another electronic device, such as a radio frequency circuit, a bluetooth chip, or a Wi-Fi chip. In one embodiment, when the processing module is a processor, and the storage module is a memory, the electronic device used in the embodiments may be a device with the structure shown in FIG. 1.

An embodiment further provides a computer storage medium, where the computer storage medium stores a computer instruction, and when the computer instruction runs on an electronic device, the electronic device is caused to perform the foregoing related method steps to implement the information transmission method in the foregoing embodiments.

An embodiment further provides a computer program product, where when the computer program product runs on a computer, the computer is caused to perform the foregoing related method steps to implement the information transmission method in the foregoing embodiments.

In addition, an embodiment of this application further provides an apparatus. The apparatus may specifically be a chip, a component, or a module. The apparatus may include a processor and a memory that are connected, where the memory is configured to store a computer-executable instruction. When the apparatus operates, the processor may execute the computer-executable instruction stored in the memory, to cause the chip to perform the information transmission method in the foregoing method embodiments.

The electronic device, computer storage medium, computer program product, or chip provided in the embodiments are all used to perform the corresponding methods provided above. Therefore, beneficial effects that can be achieved can refer to beneficial effects of the corresponding methods provided above, and details are not described herein.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the apparatus embodiment described above is merely an example. For example, the module or unit division is merely logical function division, and there may be another division manner in actual implementation. For example, a plurality of units or components may be combined or may be integrated into another apparatus, or some characteristics may be ignored or not performed. In addition, the displayed or discussed mutual couplings or direct couplings or communication connections may be implemented through some interfaces or through indirect coupling or communication connections between apparatuses or units, and may be implemented in electrical, mechanical, or other forms.

The units described as separate parts may or may not be physically separated, and the parts displayed as units may or may not be physical units, may be located in one place, or may be distributed on a plurality of different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part thereof contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes: any medium that can store program code, such as a s USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method is applied to a system, the system comprises a first electronic device and a second electronic device, the first electronic device is connected on 5 GHz, the second electronic device supports only 2.4 GHz, and the method comprises:
performing (S1401), by the first electronic device, listening on a 2.4 GHz channel;
transmitting (S1402), by the second electronic device, a first probe request frame associated with the listening on the 2.4 GHz channel to the first electronic device;
transmitting (S1403), by the first electronic device, a first probe response to the second electronic device;
establishing (S1404), by the first electronic device, a peer to peer, P2P, connection with the second electronic device; and
transmitting (S1405), by the second electronic device, information to the first electronic device;
wherein before the performing, by the first electronic device, listening on the 2.4 GHz channel, the method further comprises:
performing, by the first electronic device, listening on a 5 GHz channel;
transmitting, by the second electronic device, a second probe request frame associated with the listening on the 5 GHz channel to the first electronic device; and
skipping transmitting, by the first electronic device, a second probe response to the second electronic device, wherein a time length of listening performed by the first electronic device on the 2.4 GHz channel is less than a time length of listening performed by the first electronic device on the 5 GHz channel before the listening performed by the first device on the 2.4 GHz channel.

2. The method according to claim 1, wherein the 2.4 GHz channel comprises a social channel.

3. The method according to claim 2, wherein the 2.4 GHz channel further comprises a nonsocial channel.

4. The method according to claim 3, wherein a time length of listening performed by the first electronic device on the social channel is less than a time length of listening performed by the first electronic device on the nonsocial channel.

5. The method according to claim 3, wherein a sum of a time length of listening performed by the first electronic device on the social channel and a time length of listening performed by the first electronic device on the nonsocial channel is less than the time length of listening performed by the first electronic device on the 5 GHz channel before the listening performed by the first device on the 2.4 GHz channel.

6. The method according to any of claims 3 to 4, wherein the first electronic device is a smart TV, and the second electronic device is a mobile phone.

7. An electronic device, wherein the electronic device is connected on 5 GHz, and comprises:
one or more processors;
one or more memories, wherein
the one or more memories store one or more computer programs, the one or more computer programs comprise instructions, and when the instructions are executed by the one or more processors, the electronic device is caused to perform the following steps:
performing listening on a 2.4 GHz channel;
receiving a first probe request frame associated with the listening on the 2.4 GHz channel from another electronic device;
transmitting a first probe response associated with the listening on the 2.4 GHz channel to the another electronic device;
establishing a peer to peer, P2P, connection with the another electronic device; and
receiving information transmitted by the another electronic device;
wherein when the instructions are executed by the one or more processors, the electronic device is further caused to perform the following steps before performing listening on the 2.4 GHz channel:
performing, by the electronic device, listening on a 5 GHz channel:
receiving a second probe request frame associated with the listening on the 5 GHz channel from the another electronic device; and
skipping transmitting a second probe response associated with the listening on the 5 GHz channel to the another electronic device, wherein a time length of listening performed by the electronic device on the 2.4 GHz channel is less than a time length of listening performed by the electronic device on the 5 GHz channel before the listening performed by the electronic device on the 2.4 GHz channel.

8. The electronic device according to claim 7, wherein the 2.4 GHz channel comprises a social channel.

9. The electronic device according to any one of claims 7 to 8, wherein the electronic device is a chip.

10. The electronic device according to claim 8, wherein the 2.4 GHz channel further comprises a nonsocial channel.

11. The electronic device according to claim 10, wherein a time length of listening performed by the electronic device on the social channel is less than a time length of listening performed by the electronic device on the nonsocial channel.

12. The electronic device according to claim 10, wherein a sum of a time length of listening performed by the electronic device on the social channel and a time length of listening performed by the electronic device on the nonsocial channel is less than the time length of listening performed by the first electronic device on the 5 GHz channel before the listening performed by the first device on the 2.4 GHz channel.

13. The electronic device according to any of claims 10 to 12, wherein the electronic device is a smart TV

14. A system comprising the electronic device according to claim 13 and another electronic device, wherein the another electronic device is a mobile phone

## Patentansprüche

1. Informationsübertragungsverfahren, wobei das Verfahren auf ein System angewendet wird, wobei das System eine erste elektronische Vorrichtung und eine zweite elektronische Vorrichtung umfasst, wobei die erste elektronische Vorrichtung mit 5 GHz verbunden ist, die zweite elektronische Vorrichtung nur 2,4 GHz unterstützt, und das Verfahren umfasst:
Durchführen (S1401), durch die erste elektronische Vorrichtung, eines Abhörens auf einem 2,4-GHz-Kanal;
Übertragen (S1402), durch die zweite elektronische Vorrichtung, eines ersten Sondenanforderungsrahmens, der dem Abhören auf dem 2,4-GHz-Kanal zugeordnet ist, an die erste elektronische Vorrichtung;
Übertragen (S1403), durch die erste elektronische Vorrichtung, einer ersten Sondenantwort an die zweite elektronische Vorrichtung;
Herstellen (S1404), durch die erste elektronische Vorrichtung, einer Peer-to-Peer-Verbindung, P2P-Verbindung, mit der zweiten elektronischen Vorrichtung; und
Übertragen (S1405), durch die zweite elektronische Vorrichtung, von Informationen an die erste elektronische Vorrichtung;
wobei vor dem Durchführen, durch die erste elektronische Vorrichtung, des Abhörens auf dem 2,4-GHz-Kanal, das Verfahren ferner umfasst:
Durchführen, durch die erste elektronische Vorrichtung, eines Abhörens auf einem 5-GHz-Kanal;
Übertragen, durch die zweite elektronische Vorrichtung, eines zweiten Sondenanforderungsrahmens, der dem Abhören auf dem 5-GHz-Kanal zugeordnet ist, an die erste elektronische Vorrichtung; und
Überspringen des Übertragens, durch die erste elektronische Vorrichtung, einer zweiten Sondenantwort an die zweite elektronische Vorrichtung, wobei eine Zeitdauer des Abhörens, das durch die erste elektronische Vorrichtung auf dem 2,4-GHz-Kanal durchgeführt wird, kleiner als eine Zeitdauer des Abhörens ist, das von der ersten elektronischen Vorrichtung auf dem 5-GHz-Kanal durchgeführt wird, bevor das Abhören durch die erste Vorrichtung auf dem 2,4-GHz-Kanal durchgeführt wird.

2. Verfahren nach Anspruch 1, wobei der 2,4-GHz-Kanal einen sozialen Kanal umfasst.

3. Verfahren nach Anspruch 2, wobei der 2,4-GHz-Kanal ferner einen nicht-sozialen Kanal umfasst.

4. Verfahren nach Anspruch 3, wobei eine Zeitdauer des Abhörens, die von der ersten elektronischen Vorrichtung auf dem sozialen Kanal durchgeführt wird, kleiner als eine Zeitdauer des Abhörens ist, die von der ersten elektronischen Vorrichtung auf dem nicht-sozialen Kanal durchgeführt wird.

5. Verfahren nach Anspruch 3, wobei eine Summe einer Zeitdauer des Abhörens, das von der ersten elektronischen Vorrichtung auf dem sozialen Kanal durchgeführt wird, und eine Zeitdauer des Abhörens, das von der ersten elektronischen Vorrichtung auf dem nicht-sozialen Kanal durchgeführt wird, kleiner als die Zeitdauer des Abhörens ist, das von der ersten elektronischen Vorrichtung auf dem 5-GHz-Kanal durchgeführt wird, bevor das Abhören durch die erste Vorrichtung auf dem 2,4-GHz-Kanal durchgeführt wird.

6. Verfahren nach einem der Ansprüche 3 bis 4, wobei die erste elektronische Vorrichtung ein Smart-TV ist und die zweite elektronische Vorrichtung ein Mobiltelefon ist.

7. Elektronische Vorrichtung, wobei die elektronische Vorrichtung mit 5 GHz verbunden ist und umfasst:
einen oder mehrere Prozessoren;
einen oder mehrere Speicher, wobei
der eine oder die mehreren Speicher ein oder mehrere Computerprogramme speichern, das eine oder die mehreren Computerprogramme Anweisungen umfassen, und wenn die Anweisungen durch den einen oder die mehreren Prozessoren ausgeführt werden, die elektronische Vorrichtung veranlasst wird, die folgenden Schritte durchzuführen:
Durchführen des Abhörens auf einem 2,4 GHz-Kanal;
Empfangen eines ersten Sondenanforderungsrahmens, der dem Abhören auf dem 2,4-GHz-Kanal zugeordnet ist, von einer anderen elektronischen Vorrichtung;
Übertragen einer ersten Sondenantwort, die dem Abhören auf dem 2,4-GHz-Kanal zugeordnet ist, an die andere elektronische Vorrichtung;
Herstellen einer Peer-to-Peer-Verbindung, P2P-Verbindung, mit der anderen elektronischen Vorrichtung; und
Empfangen von Informationen, die von der anderen elektronischen Vorrichtung übertragen werden;
wobei, wenn die Anweisungen durch den einen oder die mehreren Prozessoren ausgeführt werden, die elektronische Vorrichtung ferner veranlasst wird, die folgenden Schritte durchzuführen, bevor das Abhören auf dem 2,4-GHz-Kanal durchgeführt wird:
Durchführen, durch die elektronische Vorrichtung, eines Abhörens auf einem 5-GHz-Kanal:
Empfangen eines zweiten Sondenanforderungsrahmens, der dem Abhören auf dem 5 GHz-Kanal zugeordnet ist, von der anderen elektronischen Vorrichtung; und
Überspringen des Übertragens einer zweiten Sondenantwort, die dem Abhören auf dem 5 GHz-Kanal zugeordnet ist, an die andere elektronische Vorrichtung, wobei eine Zeitdauer des Abhörens, das von der elektronischen Vorrichtung auf dem 2,4-GHz-Kanal durchgeführt wird, kleiner als eine Zeitdauer des Abhörens ist, das von der elektronischen Vorrichtung auf dem 5-GHz-Kanal durchgeführt wird, bevor das Abhören durch die elektronische Vorrichtung auf dem 2,4-GHz-Kanal durchgeführt wird.

8. Elektronische Vorrichtung nach Anspruch 7, wobei der 2,4-GHz-Kanal einen sozialen Kanal umfasst.

9. Elektronische Vorrichtung nach einem der Ansprüche 7 bis 8, wobei die elektronische Vorrichtung ein Chip ist.

10. Elektronische Vorrichtung nach Anspruch 8, wobei der 2,4-GHz-Kanal ferner einen nicht-sozialen Kanal umfasst.

11. Elektronische Vorrichtung nach Anspruch 10, wobei eine Zeitdauer des Abhörens, das von der elektronischen Vorrichtung auf dem sozialen Kanal durchgeführt wird, kleiner als eine Zeitdauer des Abhörens ist, das von der elektronischen Vorrichtung auf dem nicht-sozialen Kanal durchgeführt wird.

12. Elektronische Vorrichtung nach Anspruch 10, wobei eine Summe einer Zeitdauer des Abhörens, das von der elektronischen Vorrichtung auf dem sozialen Kanal durchgeführt wird, und eine Zeitdauer des Abhörens, das von der elektronischen Vorrichtung auf dem nicht-sozialen Kanal durchgeführt wird, kleiner als die Zeitdauer des Abhörens ist, das von der ersten elektronischen Vorrichtung auf dem 5-GHz-Kanal durchgeführt wird, bevor das Abhören durch die erste Vorrichtung auf dem 2,4-GHz-Kanal durchgeführt wird.

13. Elektronische Vorrichtung nach einem der Ansprüche 10 bis 12, wobei die elektronische Vorrichtung ein Smart-TV-ist.

14. System, umfassend die elektronische Vorrichtung nach Anspruch 13 und eine andere elektronische Vorrichtung, wobei die andere elektronische Vorrichtung ein Mobiltelefon ist.

## Revendications

1. Procédé de transmission d'informations, dans lequel le procédé est appliqué à un système, le système comprend un premier dispositif électronique et un second dispositif électronique, le premier dispositif électronique est connecté sur 5 GHz, le second dispositif électronique prend en charge uniquement 2,4 GHz, et le procédé comprend :
le fait d'effectuer (S1401), par le premier dispositif électronique, une écoute sur un canal de 2,4 GHz ;
la transmission (S1402), par le second dispositif électronique, d'une première trame de demande de sonde associée à l'écoute sur le canal de 2,4 GHz au premier dispositif électronique ;
la transmission (S1403), par le premier dispositif électronique, d'une première réponse de sonde au second dispositif électronique ;
l'établissement (S1404), par le premier dispositif électronique, d'une connexion de pair à pair, P2P, avec le second dispositif électronique ; et
la transmission (S1405), par le second dispositif électronique, d'informations au premier dispositif électronique ;
dans lequel, avant le fait d'effectuer, par le premier dispositif électronique, une écoute du canal de 2,4 GHz, le procédé comprend en outre :
le fait d'effectuer, par le premier dispositif électronique, une écoute sur un canal de 5 GHz ;
la transmission, par le second dispositif électronique, d'une seconde trame de demande de sonde associée à l'écoute sur le canal à 5 GHz au premier dispositif électronique ; et
le saut de la transmission, par le premier dispositif électronique, d'une seconde réponse de sonde au second dispositif électronique, dans lequel une durée d'écoute effectuée par le premier dispositif électronique sur le canal de 2,4 GHz est inférieure à une durée d'écoute effectuée par le premier dispositif électronique sur le canal de 5 GHz avant l'écoute effectuée par le premier dispositif sur le canal de 2,4 GHz.

2. Procédé selon la revendication 1, dans lequel le canal de 2,4 GHz comprend un canal social.

3. Procédé selon la revendication 2, dans lequel le canal de 2,4 GHz comprend en outre un canal non social.

4. Procédé selon la revendication 3, dans lequel une durée d'écoute effectuée par le premier dispositif électronique sur le canal social est inférieure à une durée d'écoute effectuée par le premier dispositif électronique sur le canal non social.

5. Procédé selon la revendication 3, dans lequel une somme d'une durée d'écoute effectuée par le premier dispositif électronique sur le canal social et d'une durée d'écoute effectuée par le premier dispositif électronique sur le canal non social est inférieure à la durée d'écoute effectuée par le premier dispositif électronique sur le canal de 5 GHz avant l'écoute effectuée par le premier dispositif sur le canal de 2,4 GHz.

6. Procédé selon l'une quelconque des revendications 3 à 4, dans lequel le premier dispositif électronique est une télévision intelligente, et le second dispositif électronique est un téléphone mobile.

7. Dispositif électronique, dans lequel le dispositif électronique est connecté à 5 GHz, et comprend :
un ou plusieurs processeurs ;
une ou plusieurs mémoires, dans lequel
la ou les mémoires stockent un ou plusieurs programmes informatiques, le ou les programmes informatiques comprennent des instructions, et lorsque les instructions sont exécutées par le ou les processeurs, le dispositif électronique est amené à effectuer les étapes suivantes :
le fait d'effectuer une écoute sur un canal de 2,4 GHz ;
la réception d'une première trame de demande de sonde associée à l'écoute sur le canal de 2,4 GHz à partir d'un autre dispositif électronique ;
la transmission d'une première réponse de sonde associée à l'écoute sur le canal de 2,4 GHz à l'autre dispositif électronique ;
l'établissement d'une connexion de pair à pair, P2P, avec l'autre dispositif électronique ; et
la réception d'informations transmises par l'autre dispositif électronique ;
dans lequel, lorsque les instructions sont exécutées par le ou les processeurs, le dispositif électronique est en outre amené à effectuer les étapes suivantes avant d'effectuer une écoute sur le canal de 2,4 GHz ;
le fait d'effectuer, par le dispositif électronique, une écoute sur un canal de 5 GHz :
la réception d'une seconde trame de demande de sonde associée à l'écoute sur le canal à 5 GHz depuis l'autre dispositif électronique ; et
le saut de la transmission d'une seconde réponse de sonde associée à l'écoute sur le canal de 5 GHz à l'autre dispositif électronique, dans lequel une durée d'écoute effectuée par le dispositif électronique sur le canal de 2,4 GHz est inférieure à une durée d'écoute effectuée par le dispositif électronique sur le canal de 5 GHz avant l'écoute effectuée par le dispositif électronique sur le canal de 2,4 GHz.

8. Dispositif électronique selon la revendication 7, dans lequel le canal de 2,4 GHz comprend un canal social.

9. Dispositif électronique selon l'une quelconque des revendications 7 à 8, dans lequel le dispositif électronique est une puce.

10. Dispositif électronique selon la revendication 8, dans lequel le canal de 2,4 GHz comprend en outre un canal non social.

11. Dispositif électronique selon la revendication 10, dans lequel une durée d'écoute effectuée par le dispositif électronique sur le canal social est inférieure à une durée d'écoute effectuée par le dispositif électronique sur le canal non social.

12. Dispositif électronique selon la revendication 10, dans lequel une somme d'une durée d'écoute effectuée par le dispositif électronique sur le canal social et d'une durée d'écoute effectuée par le dispositif électronique sur le canal non social est inférieure à la durée d'écoute effectuée par le premier dispositif électronique sur le canal de 5 GHz avant l'écoute effectuée par le premier dispositif sur le canal de 2,4 GHz.

13. Dispositif électronique selon l'une quelconque des revendications 10 à 12, dans lequel le dispositif électronique est une smart TV.

14. Système comprenant le dispositif électronique selon la revendication 13 et un autre dispositif électronique, dans lequel l'autre dispositif électronique est un téléphone mobile.
